# EUROPÄISCHE PATENTSCHRIFT

(11) **EP 2 811 328 B1**
(45) Veröffentlichungstag und Bekanntmachung des Hinweises auf die Patenterteilung: **10.04.2024**
(21) Anmeldenummer: 13170541.0
(22) Anmeldetag: 04.06.2013
(51) Int. Cl.: G02B 7/04, G01C 15/00, G02B 7/08, G02B 23/16, G03B 3/10

(54) **Positionierungsvorrichtung, insbesondere zur Verstellung von Linsen oder Linsensystemen in optischen Geräten**
Positioning device, especially for the adjustment of lenses or lens systems in optical devices
Dispositif de positionnement, notamment pour le réglage de lentilles ou de systèmes de lentilles dans des appareils optiques

(43) Veröffentlichungstag der Anmeldung: 10.12.2014
(73) Patentinhaber: Leica Geosystems AG, 9435 Heerbrugg (CH)
(72) Erfinder: Hutter, Pascal, 9442 Berneck (CH); Seifert, Benjamin, 9472 Grabs (CH); Lais, Josef, 9437 Marbach (CH)
(74) Vertreter: Kaminski Harmann

(56) Entgegenhaltungen:
- EP-A1- 0 620 463
- EP-A2- 1 992 974
- JP-A- H11 295 578
- US-A1- 2002 106 205
- US-A1- 2011 122 516

## Beschreibung

Die Erfindung betrifft ein geodätisches Vermessungsgerät mit einem Teleskop, in dem eine Fokussieroptik mit einer Positionierungsvorrichtung vorgesehen ist.

Die EP 1 992 974 A2 zeigt ein gattungsgemässes geodätisches Vermessungsgerät mit einer Positioniervorrichtung, die einen Linsenhalter und einen zylindrischen Abschnitt mit einer Führungsöffnung aufweist, sowie eine erste Führung zum Führen eines ersten Abschnittes des positionierten Bauteils längs einer ersten Führungsachse, wobei die erste Führung eine Führungsstange aufweist und die Führungsöffnung sich quer zur Längsrichtung des Linsenhalters erstreckt und die Führungsstange aufnimmt, sowie eine zweite Führung mit einer Führungsfläche zum Führen eines zweiten Abschnittes des positionierten Bauteils, wobei die erste Führung die Bewegung des positionierten Bauteils auf eine Bewegung längs der ersten Führungsachse und eine Schwenkbewegung um die erste Führungsachse beschränkt, die Führungsfläche sich parallel zur ersten Führungsachse erstreckt.

Mit Bezug auf das generelle technische Gebiet der Optik zeigt die US 2002/106205 A1 einen Optikhalterahmen, der durch zwei Führungsstangen geführt, und auch getragen wird. Die Führung A erlaubt dem Rahmen eine Translation entlang der Führungsstange, wobei die Führung C dem Rahmen zusätzlich eine vertikale Translation an diesem Ort erlaubt. Mit anderen Worten ist hierdurch eine Rotation um die Führung A möglich. Daher kann diese Führung in C als ein tragendes Gleitlager bezeichnet werden. Die zweite Führung C bleibt eine Führung, wenn sie nicht vorgespannt ist, da das Eigengewicht W1 auf ihr lastet. Im Allgemeinen kann eine Positionierungsvorrichtung zur Verstellung von Linsen oder Linsensystemen in optischen Geräten in bekannter Weise etwa ausgebildet sein mit einer motorisierten Antriebseinheit sowie einer gelagerten Spindel, wobei zum Zwecke der Einleitung der Verstellbewegung in Richtung der optischen Achse ein die zu verstellende Optik tragendes, linear auf Führungen geführtes Schiebeglied über ein Spindel-Gegensegment des Schiebeglieds mit der Spindel in Berührung steht.

Eine Anwendung von einer Positionierungsvorrichtung in einem optischen Instrument (wie etwa einem Fernrohr oder anderen Beobachtungs- oder Bildaufnahmegeräten) zur Verstellung einer Optik z.B. linear entlang einer optischen Achse des Instruments erfordert eine wiederholbare, hochpräzise und spielfreie Positionierbarkeit der Optik, sodass ein zu betrachtendes oder aufzunehmendes Bild eines Objekts vor oder während der Betrachtung/Bildaufnahme in einem möglichst kurzem Zeitabschnitt und möglichst präzise fokussiert werden kann.

Zur Realisierung von z.B. Zoom- oder Fokusverstellbewegungen von Einzellinsen oder Linsengruppen in optischen Geräten werden zunehmend anstelle von Kurvenrohren oder mechanischen Getrieben elektromotorische Direktantriebe eingesetzt. Da der Bauraum in einem optischen Gerät relativ klein ist, ist die Größe der Verstelleinheit ein wichtiges Leistungskriterium. Daher können z.B. kleine Antriebsmotoren, die zwar ein geringes Drehmoment aufweisen, aber dennoch hohe Genauigkeiten (z.B. ± 10 um) bei relativ schnellen Verschiebebewegungen (z.B. 20 mm/s) in allen Raumlagen realisieren, verwendet werden.

In der US 5,815,325 wird ein Zoomantrieb für einen Camcorder beschrieben, der einen Schrittmotor mit kleinen Abmessungen verwendet. Dabei ist die Motorwelle zur Vermeidung von Zwangs- und Axialkräften direkt als Gewindespindel ausgebildet und wird an ihrem Ende an einem Ausleger gelagert. Der Ausleger ist dabei direkt am Motorgehäuse befestigt.

Zur Aufnahme der von der Gewindespindel ausgehenden Drehbewegung und Umsetzung dieser Bewegung in eine translatorische Verschiebung eines optischen Elementes wird ein mit einer Kunststoffgewindeplatte versehenes Formelement verwendet. Die Kunststoffgewindeplatte wirkt über eine Blattfeder, die ebenfalls Bestandteil des Formelementes ist, federnd auf die Gewindespindel. Dieses Formelement ist über eine Drehachse mit dem, das optische Element tragenden, geführten Schiebeglied verbunden, so dass durch die Drehbewegung der Spindel eine Verstellbewegung des Schiebegliedes in Richtung der optischen Achse erfolgt.

Aus der DE 10 160 587 A1 ist eine weitere derartige Positionierungsvorrichtung zur Verstellung von Zoom-Linsen oder Zoom-Linsensystemen in optischen Geräten bekannt.

Das die Erfindung betreffende geodätische Vermessungsgerät kann im Speziellen dafür ausgelegt sein, mit seiner Positionierungsvorrichtung eine Fokussieroptik in einem Fernrohr eines geodätischen Vermessungsgeräts zu verstellen.

Ein bekanntes Beispiel für ein solches geodätisches Vermessungsgerät stellen ein Theodolit, ein Tachymeter oder eine Totalstation dar, die auch als elektronischer Tachymeter oder Computer-Tachymeter bezeichnet wird. Eine solche geodätische Messvorrichtung des Stands der Technik ist beispielsweise in der Veröffentlichungsschrift EP 1 686 350 beschrieben. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

Moderne Totalstationen verfügen über Mikroprozessoren zur digitalen Weiterverarbeitung und Speicherung erfasster Messdaten. Die Geräte sind in der Regel in kompakter und integrierter Bauweise hergestellt, wobei meist koaxiale Distanz- und Winkelmesselemente sowie Rechen-, Steuer- und Speichereinheiten in einem Gerät integriert sind. Abhängig von der Ausbaustufe der Totalstation sind Mittel zur Motorisierung der Anzieloptik, zur reflektorlosen Streckenmessung, zur automatischen Zielsuche und -verfolgung und zur Fernsteuerung des gesamten Geräts integriert. Aus dem Stand der Technik bekannte Totalstationen verfügen weiters über mindestens eine Funkdatenschnittstelle zum Aufbau einer Funkverbindung zu externen Peripheriekomponenten wie z.B. zu einem Datenerfassungsgerät, welches insbesondere als Fernsteuerung, handhaltbarer Datenlogger, Feldrechner, Notebook, Kleincomputer oder PDA ausgebildet sein kann. Mittels der Datenschnittstelle ist es möglich, von der Totalstation erfasste und gespeicherte Messdaten zur externen Weiterverarbeitung auszugeben, extern erfasste Messdaten zur Speicherung und/oder Weiterverarbeitung in die Totalstation einzulesen, Fernsteuersignale zur Fernsteuerung der Totalstation oder einer weiteren externen Komponente insbesondere im mobilen Feldeinsatz ein- bzw. auszugeben und Steuerungs-Software in die Totalstation zu überspielen.

Zum Anvisieren bzw. Anzielen eines zu vermessenden Zielpunkts weisen gattungsgemässe Vermessungsgeräte eine Anzieleinrichtung (wie ein Fernrohr/Teleskop) auf. In einer einfachen Ausführungsvariante ist die Visiereinrichtung beispielsweise als reines Durchsicht-Zielfernrohr ausgebildet. Moderne Geräte können ausserdem eine in das Zielfernrohr integrierte Kamera zur Erfassung eines Bildes aufweisen, wobei das erfasste Bild insbesondere als Live-Bild auf einem Display der Totalstation und/oder einem Display des zur Fernsteuerung verwendeten Peripheriegeräts - wie eines Datenloggers - angezeigt werden kann. Die Optik der Visiereinrichtung kann dabei einen manuellen Fokus - beispielsweise eine Stellschraube zur Veränderung der Fokusposition der Optik - aufweisen oder über einen Autofokus verfügen, wobei das Verändern der Fokusposition z.B. durch Motoren erfolgt. Jedoch kann durchaus auch ein manuell bedienbarer Fokus motorisiert ausgeführt sein. Automatische Fokussiereinrichtungen für Zielfernrohre geodätischer Geräte sind z.B. aus der DE 19710722, der DE 19926706 oder der DE 19949580 bekannt.

Das optische System bzw. der optische Sichtkanal der Anzieleinrichtung (Fernrohr) enthält insbesondere eine Objektivlinsengruppe, eine Fokussierlinsengruppe und ein Okular, die in dieser Reihenfolge von der Objektseite her angeordnet sind. Die Position der Fokussierlinsengruppe wird abhängig von der Objektentfernung so eingestellt, dass ein scharfes Objektbild auf einem in der Scharfstellebene angeordneten optischen Element mit Anzielmarkierung entsteht (insbesondere Retikel oder Strichplatte, oder Platte mit Fadenkreuzmarkierung und Strichmarkierungen). Dieses optische Element mit dem in dieser Ebene erzeugten Bild kann dann durch das Okular betrachtet werden.

Die zusätzlich zum oder anstelle von einem Direktsichtkanal vorgesehene koaxiale Kamera (z.B. mit CCD- oder CMOS-Flächensensor) kann in einer weiteren in der Teleskopoptik vorgesehenen Bildebene angeordnet sein, wofür eine Auskopplung eines Teillichtstrahls über einen Strahlteiler vorgesehen sein kann, sodass mit der Kamera ein Bild (bzw. eine Bildserie oder ein Video-Stream) durch das Objektiv hindurch aufnehmbar ist.

Des Weiteren kann für die koaxiale elektronische Distanzmessung ein zusätzlicher separater Sende- und Empfangskanalzweig vorgesehen sein. Zudem weisen gängige Vermessungsgeräte inzwischen eine automatische Zielverfolgungs-Funktion (ATR: "Automatic Target Recognition") auf, für die eine weitere separate ATR-Lichtquelle - z.B. ein Multimodefaserausgang, der Licht mit einer weiteren definierten Wellenlänge emittiert - sowie ein spezieller ATR-Kamerasensor zusätzlich im Teleskop integriert sind.

Um Verzeichnungen, Farbstiche oder eine Vignettierung - d.h. einen Helligkeitsabfall in Randbereichen des beobachtbaren Sichtfelds - zu vermeiden, sind enorm hohe Anforderungen an die einzelnen optischen Komponenten gegeben. Demnach sind im Allgemeinen speziell und aufwändig beschichtete Optiken zur Aus- und Einkopplung einzelner Wellenlängen erforderlich, wobei trotz Beschichtung das visuelle Band eine möglichst farbgetreue Darstellung erlauben soll.

Beispielhaft ist der Aufbau gattungsgemässer Zielfernrohre von geodätischen Geräten in den Veröffentlichungsschriften EP 1 081 459 oder EP 1 662 278 gezeigt.

Die für Vermessungen erzielbare Genauigkeit beim - über Durchsicht durch das Fernrohr erfolgenden - Anzielen von Objekten hängt stark von der Präzision der Positionierung und Justage der im Fernrohr verbauten Optiken ab. Insbesondere bewegliche Optiken (wie dies die Fokussieroptik in solchen Fernrohren darstellt) können einen wesentlichen Faktor für die mit solchen Vermessungsgeräten erreichbare Genauigkeit darstellen, da jede radiale Auslenkung einer solchen beweglichen Optik auf dem eigentlich möglichst axialen Verschiebeweg entlang der optischen Soll-Achse eine Veränderung der tatsächlichen durch das optische Gesamtsystem definierten optischen Ist-Achse bewirkt. Da dann die optische Soll-Achse möglicherweise nicht mehr hinreichend mit der optischen Ist-Achse übereinstimmt, kann - trotz scheinbar "richtiger" Anvisierung des Zielobjekts - tatsächlich jedoch die optische Soll-Achse am Zielobjekt vorbeizeigen, sodass für das Zielobjekt möglicherweise falsche Raumwinkel ausgelesen werden.

Aus der US 7,793,424 ist z.B. eine derartige Positionierungsvorrichtungen zur Verstellung von Fokus-Linsen oder Fokus-Linsensystemen in einem Fernrohr eines geodätischen Vermessungssystems bekannt.

Dabei wird ein die Fokussieroptik tragendes Schiebeglied über eine erste und zweite Führung (nämlich eine Stange und eine Gleitfläche) geführt, sodass die Beweglichkeit des Schiebeglieds zunächst durch die Stange auf eine lineare Bewegbarkeit entlang der ersten Führungsachse sowie eine Schwenkbarkeit um die erste Führungsachse begrenzt ist und zudem durch die Gleitfläche ein Anschlag für die Schwenkbarkeit gegeben ist.

Eine auf der Gleitfläche laufende Rolle des Schiebeglieds wird dabei über eine Magnetvorrichtung an die Gleitfläche gedrückt bzw. wird über die Magnetvorrichtung dafür gesorgt, dass die Rolle an die Gleitfläche angepresst und in angepresstem und kontaktierendem Zustand gehalten wird.

Für die Verschiebbarkeit des Schiebeglieds ist eine drehbare Gewindespindel vorgesehen, die über einen Motor (dessen Antriebswelle über eine flexible Kupplung mit der Spindel verbunden ist) angetrieben wird. Ein Mitnehmer mit einem Gegengewinde wird bei einer Drehbewegung der Spindel auf der Spindel translatorisch verschoben. Der Mitnehmer ist dabei mit dem Schiebeglied auf spezielle Weise verbunden, nämlich über ein elastisches Verbindungselement, das ein den Mitnehmer gegenüber der Spindel neigendes Drehmoment bewirkt.

Dieses Arrangement soll schaffen, dass möglichst wenig Spielfreiheit (zumindest an speziellen Kontaktwirkstellen) zwischen dem Gegengewinde und dem Gewinde der Spindel vorhanden ist und damit eine Hysterese in der translatorischen Bewegung des Mitnehmers und des Schiebeglieds bei Richtungsänderung der Drehbewegung der Spindel verringert bzw. vermieden werden können soll.

Nachteile dieses Arrangements ist dabei etwa die durch das auf den Mitnehmer wirkende Drehmoment gewährleistete feste Verspanntheit von Mitnehmer und Spindel, sodass - wenn sich das Schiebeglied bereits an einem zur Begrenzung des Verschiebewegs vorhandenen mechanischen Anschlag befindet und dennoch die Spindel in entsprechend falsche Richtung weiterdreht - es zu einem irreversiblen mechanischen Defekt am Spindelgewinde, am Gegengewinde des Mitnehmers, am Verstellweg-Anschlag und/oder an den Führungen kommen kann.

Weiterer Nachteil sind auch die komplexe aufwändige Bauweise und die benötigte hohe Anzahl an - jeweils nur genau eine einzige spezielle Funktion gewährleistenden - Komponenten der Positionierungsvorrichtung.

Ferner ist die Justage der Fokussieroptik (d.h. also die Ausrichtung der Fokussieroptik derart, dass der Hauptpunkt der Optik präzise an seiner Sollposition im Fernrohr sitzt und präzise entlang der Soll-Achse des Fernrohrs bewegt wird) innerhalb des Fernrohrs bei der in der US 7,793,424 beschriebenen Positionierungsvorrichtung kompliziert.

Aufgabe der Erfindung ist es nun, ein geodätisches Vermessungsgerät mit einer solchen Positionierungsvorrichtung - insbesondere für ein Fokussieroptikglied eines Fernrohrs des geodätischen Vermessungsgeräts - zu verbessern und im Speziellen dabei die oben beschrieben Nachteile zu verringern oder ganz zu eliminieren.

Im Speziellen soll die Positionierungsvorrichtung also in weniger komplexer und weniger aufwändiger Bauweise realisierbar sein, das Schiebeglied besser und weniger aufwändig justierbar sein (insbesondere was die radiale präzise Positionierbarkeit des Schiebeglieds in Zusammenwirkung mit erster und zweiter Führung betrifft) und besser - z.B. trotz einer auftretenden Fehlfunktion des Motors - gegen interne Selbst-Beschädigung geschützt sein.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein geodätisches Vermessungsgerät mit einem Teleskop, in dem eine Fokussieroptik mit einer Positionierungsvorrichtung (30) vorgesehen ist. Die die Erfindung betreffende Positionierungsvorrichtung ist dabei ausgebildet mit einer rotierbaren Spindel und einem entlang einer Positionier-Achse zu positionierenden Schiebeglied, wobei ein Spindel-Gegensegment des Schiebeglieds und die Spindel derart ausgebildet, gegenseitig angeordnet und zusammenwirkend aufeinander abgestimmt sind, dass bei Rotation der Spindel das Spindel-Gegensegment entlang der Spindel verschoben wird. Für das Schiebeglied kann dabei ein Hauptpunkt (wie etwa ein Mittelpunkt einer vom Schiebeglied getragenen Linse oder Linsengruppe) definiert sein, den es vornehmlich hochpräzise entlang der Positionier-Achse zu verschieben gilt.

Ferner ist eine erste, eine sich parallel zur Positionier-Achse erstreckende erste Führungsachse definierende Führung für das Schiebeglied vorgesehen. Dabei sind die erste Führung und ein erstes Führungs-Gegensegment des Schiebeglieds derart ausgebildet, gegenseitig angeordnet und zusammenwirkend aufeinander abgestimmt, dass das Schiebeglied entlang der ersten Führungsachse geführt wird und dem Schiebeglied eine lineare Bewegbarkeit entlang der ersten Führungsachse sowie eine Schwenkbarkeit um die erste Führungsachse verbleibt.

Des Weiteren ist eine zweite Führung für das Schiebeglied vorgesehen mit einem sich parallel zur Positionier-Achse erstreckenden zweiten Führungselement. Das zweite Führungselement und ein zweites Führungs-Gegensegment des Schiebeglieds sind dabei derart ausgebildet, gegenseitig angeordnet und zusammenwirkend aufeinander abgestimmt, dass - insbesondere bei Vorliegen einer auf das zweite Führungs-Gegensegment wirkenden Anpresskraft gegen das zweite Führungselement - das zweite Führungs-Gegensegment entlang dem zweiten Führungselement geführt wird und die Schwenkbarkeit des Schiebeglieds um die erste Führungsachse beschränkt ist. Das zweite Führungselement dient also als Anschlag für die durch die erste Führung noch gewährte Schwenkbarkeit des Schiebeglieds und als zweite Führung an einer zweiten Stelle (nämlich dem zweiten Führungs-Gegensegment) des Schiebeglieds. Insbesondere kann das zweite Führungselement in Zusammenwirkung mit dem zweiten Führungs-Gegensegment so ausgebildet sein, dass das zweite Führungs-Gegensegment entlang dem zweiten Führungselement in einer sich parallel zur Positionier-Achse erstreckenden zweiten Längs-Führungsachse und in einer sich senkrecht dazu erstreckenden zweiten Quer-Führungsachse geführt wird, sodass also dem Schiebeglied eine Bewegbarkeit entlang der zweiten Längs-Führungsachse und eine (zumindest gewisse) Bewegbarkeit (Freiheit zur Bewegung/Ausweichung) in Richtung der zweiten Quer-Führungsachse verbleibt.

Das Schiebeglied (32) trägt dabei eine Fokussieroptik, insbesondere ein Fokuslinsensystem oder eine Fokuslinse, sodass ein Hauptpunkt der Fokussieroptik entlang einer optischen Soll-Achse des Teleskops als Positionier-Achse verschiebbar ist und dadurch eine Fokuseinstellung vorgenommen werden kann.

Gemäss einem ersten erfindungsgemässen Haupt-Aspekt ist nun ein derart ausgebildetes und angeordnetes sowie eine derartige Kraft bewirkendes Einspannelement vorgesehen, dass dadurch das Schiebeglied - hinsichtlich seiner durch die erste Führung gewährten Schwenkbarkeit um die erste Führungsachse - mit seinem Spindel-Gegensegment und seinem zweiten Führungs-Gegensegment eingespannt ist zwischen der Spindel bzw. dem zweiten Führungselement, sodass anhand von der durch das Einspannelement bewirkten Kraft zusammen mit einer durch die erste Führung bewirkten Schwenk-Ankerung des Schiebeglieds
- sowohl einerseits das Spindel-Gegensegment und die Spindel
- als auch andererseits das zweite Führungs-Gegensegment und das zweite Führungselement
jeweils aneinandergedrückt werden.

Ferner ist das Einspannelement als Blattfeder ausgebildet, die mit ihren flachen Seiten parallel zur Spindelachse und Positionier-Achse angeordnet ist sowie eine längliche Form aufweist und mit ihrer Längsachse senkrecht zur Spindelachse ausgerichtet ist. Das Spindel-Gegensegment ist über das Einspannelement relativ zu einem Haupt-Körper des Schiebeglieds flexibel gelagert und in vorgespanntem Zustand des Einspannelements wirkt eine Spreizkraft auf das Spindel-Gegensegment relativ zum Haupt-Körper, sodass der eingespannte Zustand des Schiebeglieds mit seinem Spindel-Gegensegment und seinem zweiten Führungs-Gegensegment zwischen der Spindel bzw. dem zweiten Führungselement bereitgestellt wird
Gemäss dem ersten Haupt-Aspekt der Erfindung wird somit dasselbe Einspannelement, welches dafür sorgt, dass das Spindel-Gegensegment und die Spindel aneinandergedrückt und somit in einem in Wirkkontakt stehendem Zustand gehalten werden, in einer Dualfunktion (und unter Ausnutzung der ersten Führung als Schwenk-Ankerung) auch gleichzeitig dafür verwendet, dass das zweite Führungs-Gegensegment und das zweite Führungselement aneinandergedrückt und somit in einem in Wirkkontakt stehendem Zustand gehalten werden.

Dadurch wird vorteilhaft das im Stand der Technik gemäss der Lehre der US 7,793,424 bisher als unverzichtbar geltende Bedürfnis nach einem separaten Mittel (wie eine separate magnetische Anpressvorrichtung) zum Anpressen der Rolle (als zweites Führungs-Gegensegment) gegen die Gleitfläche (als zweites Führungselement) erfindungsgemäss aufgelöst.

Erfindungsgemäss wird somit eine weniger komplexe und weniger aufwändige Bauweise - insbesondere auch was die benötigte Anzahl an Komponenten der Positionierungsvorrichtung betrifft - ermöglicht.

Das Spindel-Gegensegment kann im Rahmen der Erfindung dabei derart mit offenem, insbesondere einseitigem, Spindeleingriff ausgebildet sein und derart mit der Spindel und dem Einspannelement zusammenwirken, dass in eingespanntem Zustand des Schiebeglieds
- einerseits das Spindel-Gegensegment und die Spindel - anpresskraftbedingt - eine im Wesentlichen spielfreie formschlüssige Verbindung eingehen (also dass jeweils eine Normal-Kraft - actio und reactio - als gegenseitige Anpresskraft auf das Spindel-Gegensegment und die Spindel wirken) und
- andererseits - durch flexible Lagerung des Spindel-Gegensegments oder der Spindel - anpresskraftentgegengesetzt eine Bewegungsfreiheit für das Spindel-Gegensegment bzw. die Spindel zur Lösung der Verbindung gewährt ist (also für das Spindel-Gegensegment zum Abheben von der Spindel und/oder für die Spindel zum Abheben vom Spindel-Gegensegment).

Dadurch kann nun die Positioniervorrichtung besser - z.B. trotz einer auftretenden Fehlfunktion des Motors - gegen interne Selbst-Beschädigung geschützt werden. So kann z.B. im Fall, wenn sich das Schiebeglied bereits an einem zur Begrenzung des Verschiebewegs vorhandenen mechanischen Anschlag befindet und dennoch die Spindel in entsprechend falscher Richtung weiterdreht, sich das Spindel-Gegensegment nun anpresskraftentgegengesetzt aus der formschlüssigen Wirkverbindung mit der Spindel lösen und ein irreversibler mechanischer Defekt an der Spindel, dem Spindel-Gegensegment, am Verstellweg-Anschlag und/oder an den Führungen vermieden werden.

### Beispielsweise kann im Speziellen

- das Spindel-Gegensegment relativ zu einem Haupt-Körper des Schiebeglieds (welcher Haupt-Körper das erste und zweite Führungs-Gegensegment fix relativ zueinander positioniert aufweist und für welchen ein Hauptpunkt, den es hochpräzise entlang einer Positionier-Achse zu verschieben gilt, definiert ist) und/oder
- die Spindel relativ zu einem (zumindest die erste und zweite Führung tragenden) Rahmenwerk
flexibel gelagert sein, sodass eine relativ zueinander ermöglichte Bewegbarkeit in zumindest einem weiteren Freiheitsgrad (natürlich zusätzlich zur vorgesehenen Rotation der Spindel und der translatorischen Bewegung des Spindel-Gegensegments entlang der Spindel) zwischen Spindel-Gegensegment und Spindel gewährleistet ist, welche Bewegbarkeit in zumindest geringem Umfang das Spindel-Gegensegment und die Spindel zusammenführbar (sodass diese sich kontaktieren) bzw. auseinanderbringbar (sodass diese sich zumindest geringfügig voneinander abheben) macht.

Das das Spindel-Gegensegment und den Haupt-Körper gegenseitig lagernde (bzw. flexibel elastisch verbindende) Einspannelement ist in mindestens einem Freiheitsgrad in einer Ebene senkrecht zur Spindelachse flexibel und zumindest in Richtung der Positionier-Achse steif ausgebildet. Das Einspannelement ist als - einenends fix mit dem Haupt-Körper und anderenends fix mit dem Spindel-Gegensegment verbundene - Blattfeder ausgebildet, die mit ihren flachen Seiten parallel zur Spindelachse und Positionier-Achse angeordnet ist.

Dies sorgt für die Flexibilität hinsichtlich Abhebbarkeit des Spindel-Gegensegments von der Spindel und zudem für einen gleichmässigen Anpressdruck des Spindel-Gegensegments an die Spindel über deren gesamte gegenseitige Kontaktfläche.

Die Blattfeder weist eine längliche Form auf und ist mit ihrer Längsachse senkrecht zur Spindelachse ausgerichtet, sodass zudem für eine gewisse Flexibilität hinsichtlich einer Kippbarkeit des Spindel-Gegensegments gegenüber Spindel gesorgt ist.

Dies erlaubt zusammen mit dem gleichmässigen Anpressdruck selbst bei - in entspanntem Zustand der Blattfeder eigentlich vorhandenen - Ungenauigkeiten in der Positionierung von Spindel-Gegensegment und Spindel (z.B. leichte gegenseitige Kippstellung) dafür, dass in eingespanntem Zustand dann das Spindel-Gegensegment dennoch über den gesamten gegenseitigen Kontaktbereich/-linie gleichmässig an die Spindel angedrückt wird und durch die Anpresskraft bedingt das Spindel-Gegensegment in eine formschlüssige und im Wesentlichen spielfreie Wirkverbindung mit der Spindel gebracht und so gehalten werden kann.

Somit ist also hierdurch der eingespannte Zustand des Schiebeglieds mit seinem Spindel-Gegensegment und seinem zweiten Führungs-Gegensegment zwischen der Spindel bzw. dem zweiten Führungselement bereitgestellt.

Zusätzlich kann jedoch auch die Spindel relativ zum Rahmenwerk in einer Quer-Richtung senkrecht zur Spindelachse flexibel gelagert sein und das Einspannelement derart ausgebildet und angeordnet sein, dass in vorgespanntem Zustand des Einspannelements eine translatorische Kraft auf die Spindel in dieser Quer-Richtung wirkt. Dann kann auch hierdurch der eingespannte Zustand des Schiebeglieds mit seinem Spindel-Gegensegment und seinem zweiten Führungs-Gegensegment zwischen der drückenden Spindel bzw. dem zweiten Führungselement bereitgestellt werden.

In einer Weiterbildung des ersten erfindungsgemässen Haupt-Aspekts kann ferner dadurch, dass die erste Führung in eingespanntem Zustand des Schiebeglieds als Ankerung für das Schiebeglied dient, ein die erste Führung und das erste Führungs-Gegensegment relativ zueinander lagerndes erstes Lager durch die durch das Einspannelement bewirkte Kraft (sozusagen in einer dritten gleichzeitigen Funktion desselben Einspannelements) vorgespannt werden. Insbesondere kann dadurch das erste Führungs-Gegensegment in eine definierte Position relativ zur ersten Führung gedrückt werden.

Gemäss einem zweiten Haupt-Aspekt sind das Schiebeglied mit seinem ersten und zweiten Führungs-Gegensegment und die erste und zweite Führung derart relativ zueinander angeordnet und aufeinander abgestimmt, dass - in einer senkrecht zur Positionier-Achse ausgerichteten Querschnitt-Ebene betrachtet -
- eine x-Richtung, die vom vornehmlich präzise zu positionierenden Hauptpunkt des Schiebeglieds zum Durchstosspunkt von der zweiten Längs-Führungsachse der zweiten Führung durch die Querschnitt-Ebene zeigt, und
- eine y-Richtung, die von diesem Hauptpunkt zum Durchstosspunkt von der ersten Führungsachse durch die Querschnitt-Ebene zeigt,
einen Winkel von zwischen 60 und 120 Grad, insbesondere zumindest ungefähr einen rechten Winkel, einschliessen, sodass
- für einen in x-Richtung betrachteten x-Verlauf einer bei Verschieben des Schiebeglieds tatsächlich zurückgelegten Spur des Hauptpunkts - im Wesentlichen unbeeinflusst von der ersten Führung - die zweite Führung massgeblich ist und
- für einen in y-Richtung betrachteten y-Verlauf der besagten Spur des Hauptpunkts - im Wesentlichen unbeeinflusst von der zweiten Führung - die erste Führung massgeblich ist.

Dadurch kann eine Separierung bei einer Justage des Schiebeglieds (bzw. der für die Positionierung des Schiebeglieds relevanten Positionierung der ersten und zweiten Führung) bewirkt werden in separierte Justageschritte/-vorgänge für einerseits die Positionierung des Hauptpunkts des Schiebeglieds einmal in x-Richtung und andererseits die Positionierung des Hauptpunkts des Schiebeglieds in y-Richtung.

Dadurch wirken sich "Misspositionierungen" der ersten Führung in x-Richtung bzw. der zweiten Führung in y-Richtung deutlich geringer auf eine Falschpositionierung bzw. einen Spurfehler des Hauptpunktes aus als bei einer Anordnung, bei welcher die x- und y-Positionierung von zumindest einer der beiden oder gar beiden Führungen relevant ist für die präzise einzuhaltende SollPosition/-Spur des Hauptpunkts.

Die gegenseitige Beeinflussung der Positionierungen der ersten und zweiten Führung hinsichtlich der sich dadurch ergebenden Position/Spur des Hauptpunkts in x- und y-Richtung steht dabei in sinusförmiger Abhängigkeit um eine Anordnungsweise mit rechtem Winkel zwischen x- und y-Richtung.

Bei einer Anordnungsweise mit rechtem Winkel zwischen x- und y-Richtung ist die gegenseitige Beeinflussung der Führungen auf x- und y-Position des Hauptpunkts entlang der Spur dabei minimal (also im Scheitelpunkt einer Sinuskurve). Ferner nimmt die gegenseitige Beeinflussung auch bei Abweichungen vom rechten Winkel nur langsam zu (da die Sinuskurve um den Scheitelpunkt sehr flach ist).

Daher können auch Abweichungen z.B. von bis zu etwa ± 30° vom rechten Winkel noch im Sinne der Erfindung zu einer hinlänglichen Verringerung des (unerwünschten) Einflusses der ersten Führung auf die x-Position und der zweiten Führung auf die y-Position des Hauptpunkts bzw. der Spur des Hauptpunkts führen.

Eine bessere Separierung bzw. Unabhängigkeit der ersten und zweiten Führung voneinander (was den resultierenden x- und y-Verlauf der Spur des Hauptpunkts betrifft) kann jedoch bewirkt werden, wenn eine Abweichungen von max. etwa ± 15° vom rechten Winkel, im Speziellen von max. etwa ± 10°, eingehalten wird.

Insbesondere hinsichtlich der Unabhängigkeit der zweiten Führung von der ersten Führung (d.h. was die gewünschte möglichst ausschliessliche Vorgabe des x-Verlaufs der Spur des Hauptpunkts durch die zweite Führung betrifft - also möglichst unabhängig von der ersten Führung) spielt neben dem Winkel zwischen x- und y-Richtung auch noch die Länge des "y-Hebelarms" zwischen Hauptpunkt und der ersten Führungsachse (sowie - bei Abweichung vom rechten Winkel - ein Verhältnis der Länge des "y-Hebelarms" relativ zur Länge des "x-Hebelarms" zwischen Hauptpunkt und der zweiten Längs-Führungsachse) eine Rolle. Dabei gilt im Allgemeinen, dass umso länger der "y-Hebelarm" ist, die Unabhängigkeit der zweiten Führung von der ersten Führung - was die gewünschte möglichst ausschliessliche Vorgabe des x-Verlaufs der Spur des Hauptpunkts durch die zweite Führung betrifft - umso höher ist.

Diese Anordnung vereinfacht somit vorteilhaft ein Justagevorgang der Positionierungsvorrichtung innerhalb eines optischen Instruments sowie damit ggf. auch die erzielbare Positioniergenauigkeit (Soll-Spur-Einhaltegenauigkeit) des Hauptpunkts entlang der Positionier-Achse.

Die beiden Haupt-Aspekte können dabei zwar vorteilhaft in einer Ausführungsform miteinander kombiniert werden, wobei sich Synergieeffekte ergeben. Allerdings können diese zur Bewirkung der jeweils genannten Vorteile auch jeweils nur einzeln verwirklicht werden.

Folgende allgemeine erfindungsgemässe Weiterbildungen können dabei angewendet werden:
Die erste Führung kann dabei ein insbesondere als Führungsstange ausgebildetes erstes Führungselement aufweisen und es kann ein das erste Führungselement und das erste Führungs-Gegensegment relativ zueinander lagerndes erstes Lager vorgesehen sein (welches jedoch - insbesondere in Ausführung eines Gleitlagers - auch direkt durch erstes Führungselement und erstes Führungsgegensegment gebildet sein kann).

Speziell kann also das Lager ausgebildet sein als
- Gleitlager, speziell 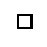 als V- oder U-Lager mit am ersten Führungs-Gegensegment angeordneten Gleitflächen oder Gleitkanten, insbesondere aus Bronze oder gleitoptimiertem Kunststoff, oder 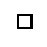
   als Buchsenlager mit am ersten Führungs-Gegensegment angeordneter runder Buchse, insbesondere aus Bronze oder gleitoptimiertem Kunststoff,
- Kugellager oder
- Rollenlager, insbesondere zweiachsig.

Hinsichtlich der Zusammenwirkung von dem zweiten Führungselement und dem zweiten Führungsgegensegment kann (insbesondere im Rahmen des zweiten Haupt-Aspekts der Erfindung) wesentlich sein, dass das zweite Führungs-Gegensegment entlang dem zweiten Führungselement in einer sich parallel zur Positionier-Achse erstreckenden zweiten Längs-Führungsachse und in einer sich senkrecht dazu erstreckenden, in y-Richtung zeigenden zweiten Quer-Führungsachse geführt wird, sodass also dem Schiebeglied eine Bewegbarkeit entlang der zweiten Längs-Führungsachse und eine (zumindest gewisse) Bewegbarkeit (Freiheit zur Bewegung/Ausweichung) in y-Richtung verbleibt. Dies kann etwa dadurch bewirkt werden, dass das zweite Führungselement als ebene Gleitfläche, insbesondere als Keramikplatte, ausgebildet ist. Die Längsachse der Gleitfläche sollte dann parallel zur Positionier-Achse ausgerichtet sein, sodass dadurch die zweite Längs-Führungsachse definiert ist, und eine Querachse der Gleitfläche in y-Richtung, sodass dadurch die zweite Quer-Führungsachse definiert ist.

Dies (also die "flächige" Führung an der zweiten Führung - d.h. also mit über einen gewissen y-Richtungsbereich hinweg gleich bleibender Führung was die durch die zweite Führung bewirkte x-Positionierung des Hauptpunkts betrifft) erlaubt bei einem Justagevorgang zunächst nur die y-Positionierung des Hauptpunkts vorzunehmen (über eine entsprechende Anpassung der y-Positionierung der ersten Führung, also z.B. der ersten Führungsstange), da dann die zweite Führung unbetroffen davon verbleiben kann.

Alternativ kann dies jedoch auch durch eine anders ausgebildete zweite Führung so bewirkt werden, z.B. wenn das zweite Führungselement als Stange ausgebildet ist und das zweite Führungs-Gegensegment als gerade kreiszylindrische Rolle mit gerader/flacher Ausdehnung (also was die Breite der Rolle bzw. die "Höhe" des Zylinders betrifft) in y-Richtung (was dann wiederum eine gleich bleibende Führung in Richtung der zweiten Längs-Führungsachse über einen gewissen variablen y-Richtungsbereich hinweg gewährleistet).

Abhängig von der Ausbildung des zweiten Führungselements kann das zweite Führungs-Gegensegment vorteilhaft ausgebildet sein als bzw. aufweisen
- eine Rolle,
- ein Kugellager,
- ein oder mehrere Stiftelemente als Gleitelement,
- ein oder mehrere Kugelelemente als Gleitelement oder
- eine Fläche, im Speziellen aus gleitoptimiertem Kunststoff, als Gleitelement.

Die Spindel kann beispielsweise als Gewindespindel und das Spindel-Gegensegment als Rechen (oder auch Kamm genannt, z.B. mit einer Vielzahl von Zähnen/Zacken, aber auch ggf. mit wenigen oder gar nur einem Zahn/Zacken) ausgebildet sein.

Ferner kann die Positioniervorrichtung ausgebildet sein mit einem Motor mit einer Antriebswelle, einer Kupplung zur Verbindung der Antriebswelle mit der Spindel, insbesondere wobei die Kupplung als Klauenkupplung mit elastischer Zwischenscheibe ausgebildet ist, und/oder einem zumindest die erste und zweite Führung, den Motor sowie die Spindel tragenden Rahmenwerk.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird.

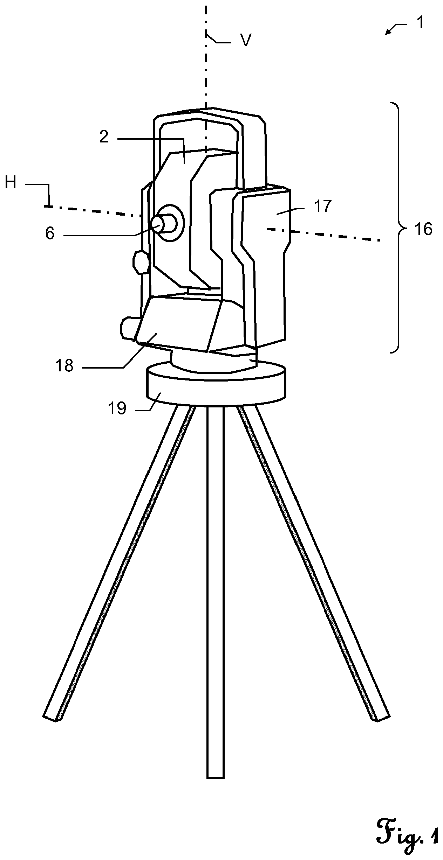

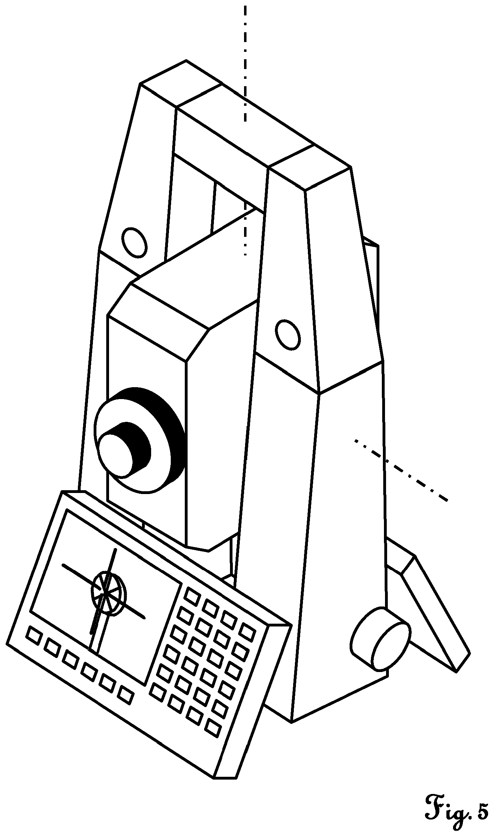

Figuren 1 und 5 zeigen ein erfindungsgemässes, als Totalstation ausgebildetes geodätisches Vermessungsgerät 1 zur Messung von Horizontalwinkeln, Vertikalwinkeln (was Schwenkstellungen von der Stütze und der Anzieleinheit entspricht) und Distanzen zu einem beabstandeten und anvisierten Ziel.

Die Totalstation kann - wie dies in Figur 1 gezeigt ist - auf einem Stativ angeordnet sein, wobei eine Basis 19 der Totalstation direkt und fest mit dem Stativ verbunden ist. Der Hauptkörper der Totalstation, der auch als Oberteil 16 bezeichnet wird, ist relativ zur Basis 19 um eine vertikale Stehachse V drehbar.

Das Oberteil 16 weist dabei eine - z.B. durch zwei Säulen gebildete - Stütze 17, eine zwischen den Säulen um die horizontale Kippachse H drehbar gelagerte Visiereinrichtung 2 sowie ein elektronisches Datenverarbeitungs- und Anzeige-Modul 18, welche durch eine Steuer- und Auswerteeinheit sowie ein Display gebildet wird, auf. Das elektronische Datenverarbeitungs- und Anzeige-Modul 18 kann in bekannter Weise zur Steuerung des Vermessungsgeräts 1 sowie zur Verarbeitung, Anzeige und Speicherung von Messdaten ausgebildet sein (alternativ sind auch andere Platzierungen z.B. des Datenverarbeitungsmoduls realisierbar [also extern des Anzeige-Moduls 18], wie z.B. direkt in die Basis 19 integriert oder gar ganz extern vom hier dargestellten Korpus des Vermessungsgeräts).

Die Anzieleinheit bzw. Visiereinrichtung 2 ist an der Stütze 17 um eine horizontale Kippachse H drehbar angeordnet und kann somit zur Ausrichtung auf ein Zielobjekt relativ zur Basis 19 horizontal und vertikal geschwenkt bzw. gekippt werden. Dabei ist die Visiereinrichtung als eine gemeinsame Visiereinrichtungs-Baueinheit ausgeführt, wobei zumindest ein Objektiv, eine Fokussieroptik, ein koaxialer Kamerasensor, eine optische Anziel-Strichkreuz-Platte und das Okular 6 in bzw. an einem gemeinsamen Visiereinrichtungs-Gehäuse angeordnet sind.

Mittels der Visiereinrichtung 2 kann ein Zielobjekt angezielt und die Entfernung von der Totalstation zu dem Zielobjekt elektrosensorisch erfasst werden. Weiters sind Mittel zum elektrosensorischen Erfassen der Winkelausrichtung des Oberteils 16 relativ zur Basis 19 und der Visiereinrichtung 2 relativ zur Stütze 17 vorgesehen. Diese elektrosensorisch erfassten Messdaten werden der Steuer- und Auswerteeinheit zugeführt und von dieser verarbeitet, so dass die Position des Zielpunkts relativ zur Totalstation durch Datenverarbeitungs- und Anzeige-Modul 18 ermittelbar, graphisch anzeigbar und speicherbar ist.

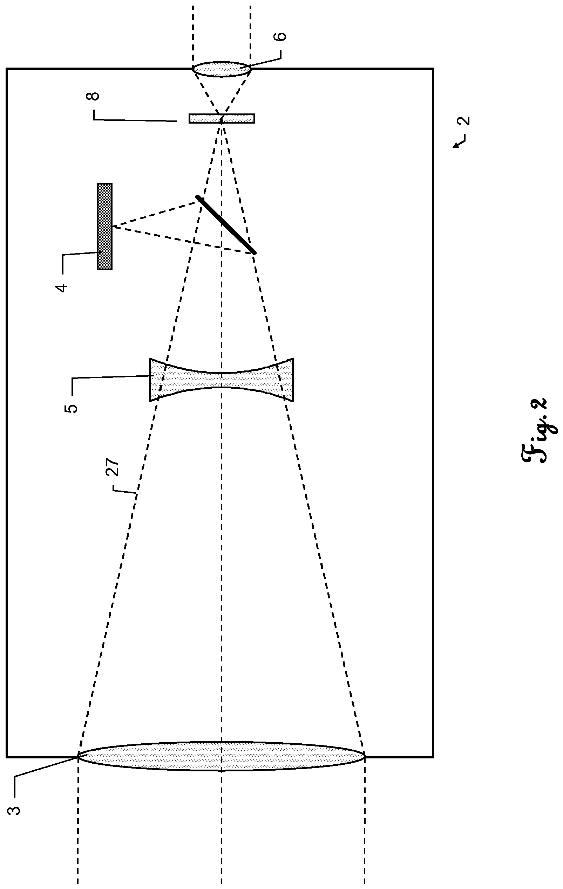

Figuren 2, 3 und 4 zeigen schematisch mögliche Ausführungsformen von der Anzieleinheit mit Teleskop-Optik, wie diese auch bereits im Stand der Technik hinlänglich bekannt sind.

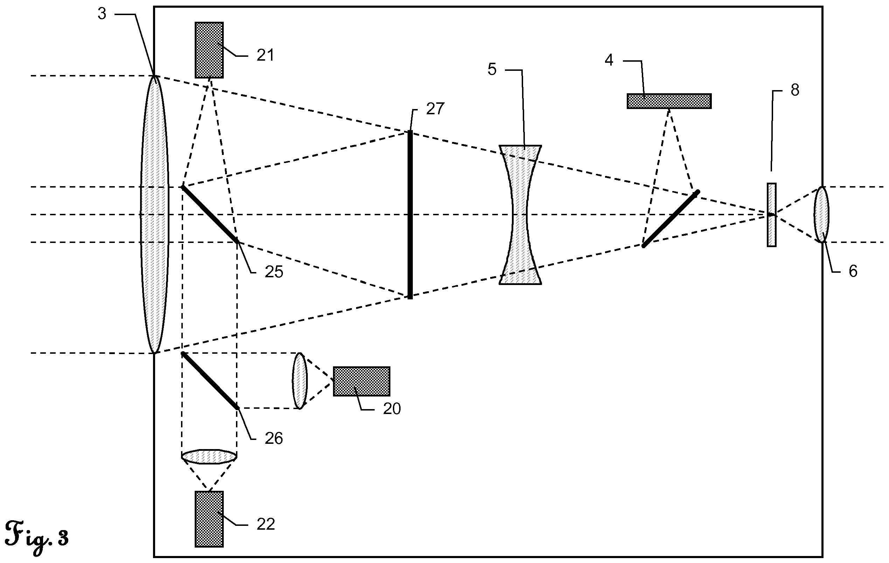

Figur 2 zeigt dabei eine vereinfachte Form der Ausführungsform, die in Figur 3 gezeigt ist. Figur 3 zeigt dabei eine refraktive Ausführungsform für eine erfindungsgemässe Visiereinrichtungsoptik.

Die Visiereinrichtungsoptik weist das Objektiv 3, die Fokussieroptik 5, einen - koaxial zur optischen Achse der Visiereinrichtung 2 ausgerichteten - Kamerasensor 4 zur Erfassung eines Kamera-Bildes, eine Fadenkreuz-Strichplatte 8 sowie ein Okular 6 auf.

Der Kamerasensor 4 ist dabei mit einem elektronischen Grafikprozessor zur Generierung eines Anzeigebilds aus dem erfassten Kamera-Bild verbunden. Grafikprozessor ist wiederum mit dem Display verbunden, sodass das generierte Anzeigebild anhand des Displays dargestellt werden kann.

Das Objektiv 3 kann z.B. auch mehrlinsig aufgebaut oder panfokal - mit veränderlichem Sichtfeld - ausgeführt sein.

Für die Distanzmessung und die automatische Zielsuchfunktion sind eine EDM-Laserquelle 20 bzw. eine Feinanziel-Lichtquelle 22 vorgesehen, wobei die EDM-Laserstrahlen bzw. die Feinanziel-Strahlen anhand eines ersten und zweiten Strahlkombinierers 25,26 - wie beispielsweise Strahlteilerflächen mit dichroitischer Beschichtung - entsprechend ein- und ausgekoppelt werden.

Die EDM-Laserquelle 20 kann z.B. EDM-Laserstrahlen im visuellen Bereich - etwa mit einer Wellenlänge von 630 nm - emittieren, sodass ein Messfleck am Zielobjekt sichtbar ist.

Zwischen dem ersten Strahlkombinierer 25 und der Fokussieroptik 5 kann dabei Strahlauskoppler 27 vorhanden sein, der die EDM-Laserstrahlen auskoppelt, hingegen das visuelle Spektrum vorteilhaft möglichst ungehindert transmittiert. Die ausgekoppelten EDM-Laserstrahlen werden durch den Strahlkombinierer 25 auf einen EDM-Empfänger 21 gelenkt.

Das in seiner Stellung veränderliche Fokussierelement 5 kann alternativ auch mehrlinsig ausgebildet sein. Vorteilhaft weist das Fokussierelement 5 eine stabile, präzise reproduzierbare Position für Objekte im Unendlichen (sowie für andere Fokuspositionen) auf, sodass eine möglichst gute erzielbare Genauigkeit bei der automatischen Feinanzielung gewährleistet werden kann.

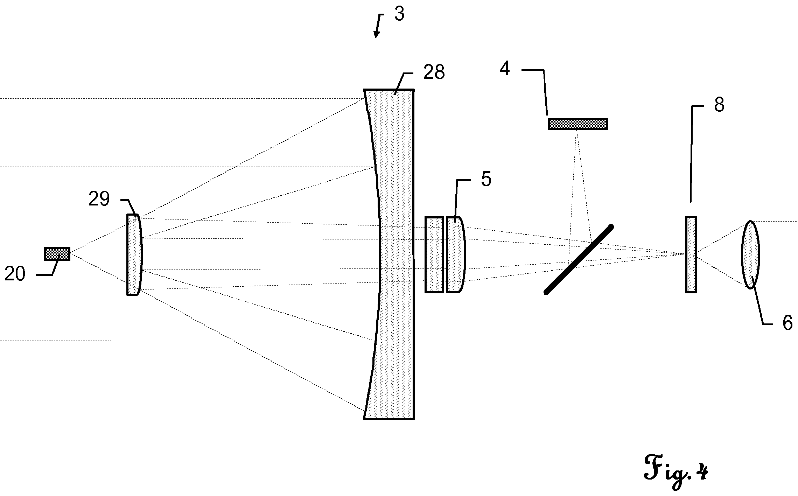

Figur 4 zeigt eine weitere Ausführungsform für eine erfindungsgemässe Visiereinrichtungsoptik. In diesem Fall ist die Visiereinrichtung als katadioptrisches System mit Spiegeloptik ausgeführt. Ein erster, konkaver Spiegel 28 dient dabei als Objektiv 3.

Ein zweiter, kleinerer Spiegel 29 ist für EDM-Laserstrahlen durchlässig ausgebildet, sodass die anhand der EDM-Laserquelle 20 ausgesendeten EDM-Laserstrahlen für die Distanzmessung durch den zweiten Spiegel 29 transmittiert werden.

Anhand der mehrlinsigen Fokussieroptik 5 wird ein Bild des Sichtfeldbereichs auf den Kamerasensor 4 fokussiert und als Kamera-Bild erfasst. Zudem wird auch in der Ebene der Strichplatte 8 ein Zwischenbild erzeugt, das von einem Benutzer durch das Okular 6 betrachtet werden kann.

Die für Vermessungen erzielbare Genauigkeit bei der - über Durchsicht durch solche Anzieleinheiten erfolgenden - Anzielung von Objekten hängt stark von der Präzision der Positionierung und Justage der im Fernrohr verbauten Optiken ab. Insbesondere die bewegliche Fokussieroptik stellt einen wesentlichen Faktor für die mit solchen Vermessungsgeräten erreichbare Genauigkeit dar, da jede radiale Auslenkung einer solchen beweglichen Optik auf dem eigentlich möglichst axialen Verschiebeweg entlang der optischen Soll-Achse eine Veränderung der tatsächlichen durch das optische Gesamtsystem definierten optischen Ist-Achse bewirkt. Da dann die optische Soll-Achse möglicherweise nicht mehr mit der optischen Ist-Achse übereinstimmt, kann - trotz scheinbar "richtiger" Anvisierung des Zielobjekts - tatsächlich jedoch die optische Soll-Achse am Zielobjekt vorbeizeigen, sodass für das Zielobjekt möglicherweise falsche Raumwinkel ausgelesen werden.

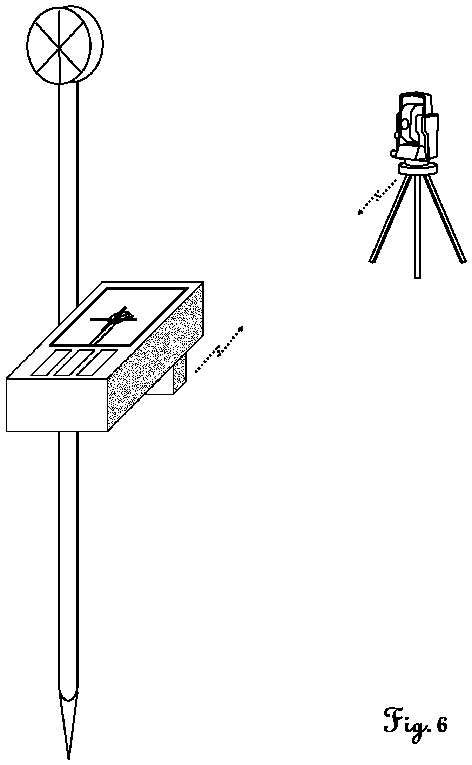

Figur 6 zeigt eine körperlich von der Basisstation (im Hintergrund ebenso gezeigt) unabhängige Peripherie-Fernsteuer-Einheit mit eigenem zusätzlichem Display und eigener zusätzlicher Auswerte- und Steuereinheit. Auch beim Anvisieren über das mit der in das Fernrohr integrierten Kamera aufgenommene, an die Fernsteuer-Einheit gesendete und dort angezeigte Bild kann derselbe Fehler, der oben beschrieben ist, auftreten, falls die bewegliche Fokussieroptik auf ihrem axialen Verschiebeweg entlang einer Soll-Positionierachse eine radiale Auslenkung erfährt.

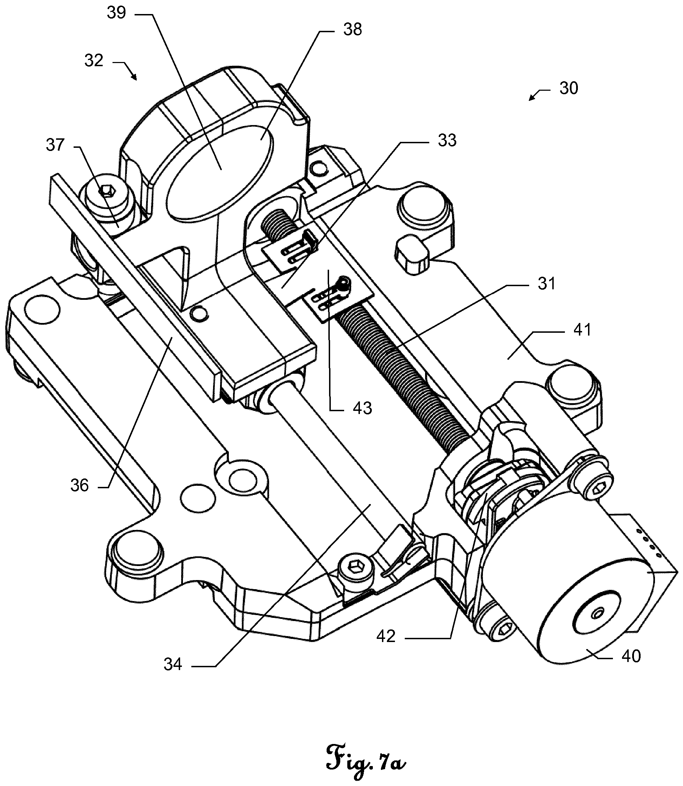

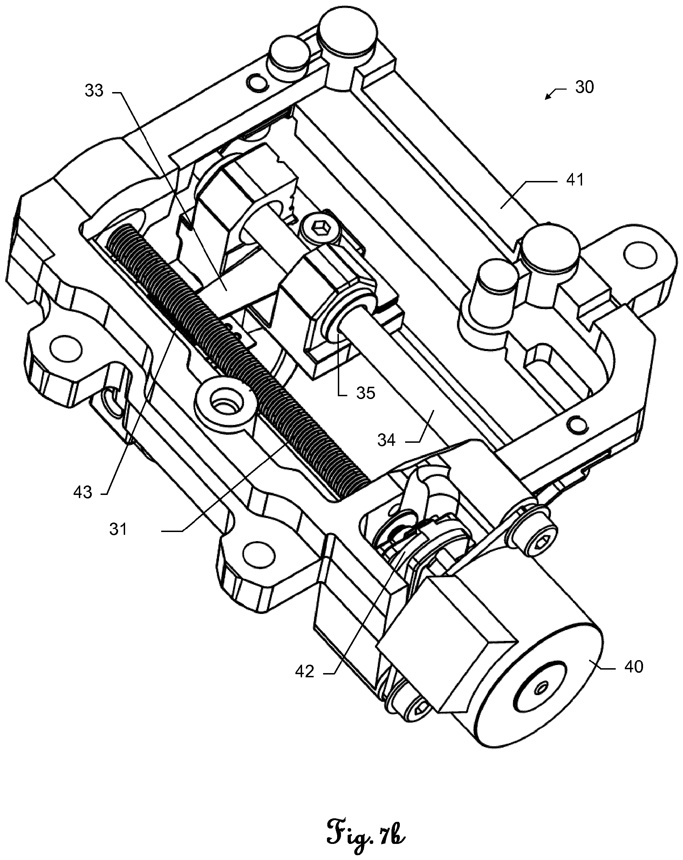

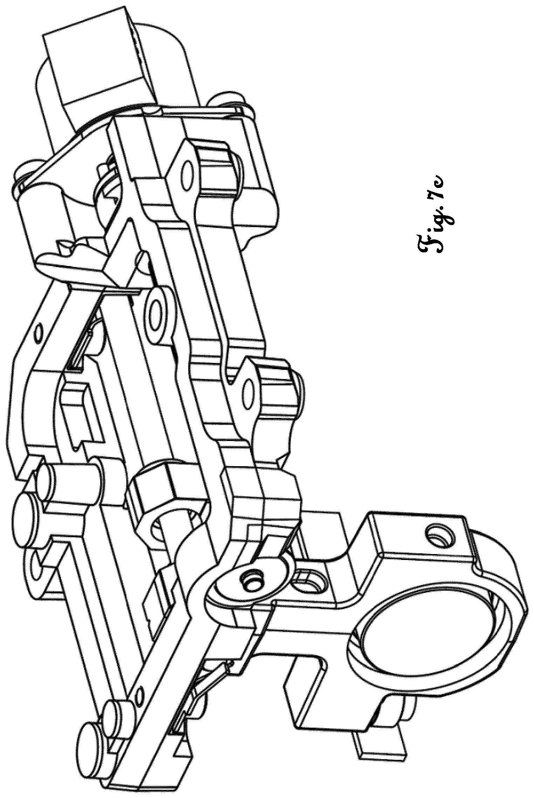

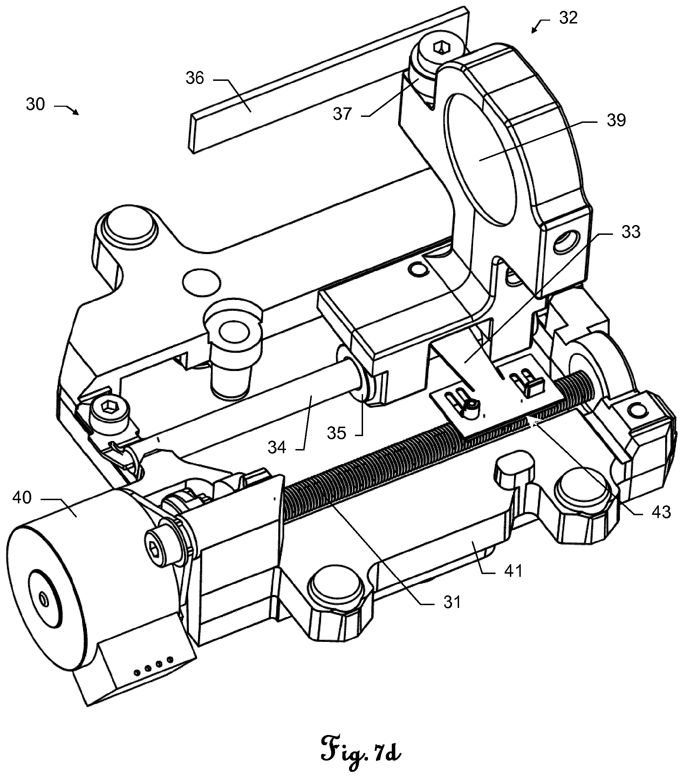

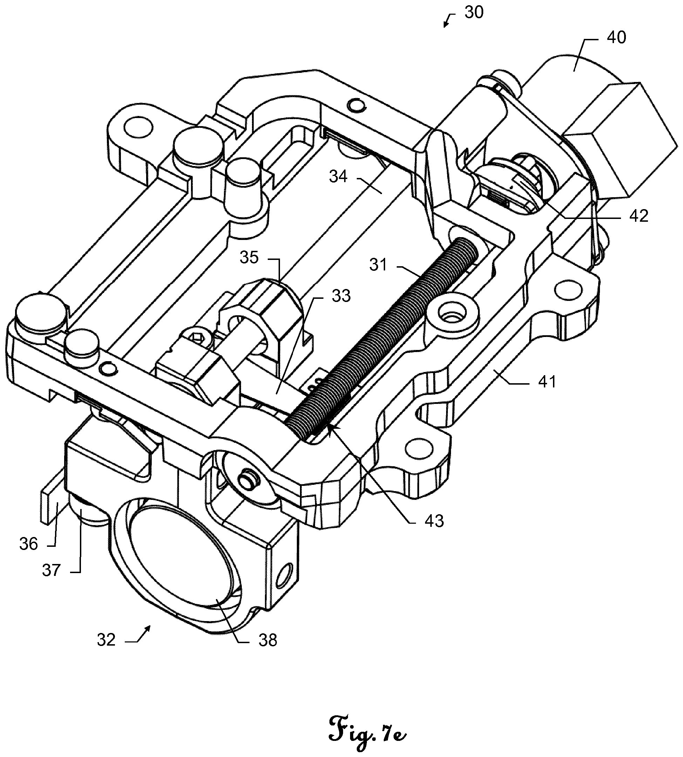

Figuren 7a bis 7e zeigen eine beispielhafte Ausführungsform für eine erfindungsgemässe Positioniervorrichtung 30 zur Verstellung der Fokussieroptik, die z.B. für die Anwendung in einem Fernrohr eines geodätischen Vermessungsgeräts zur Verschiebung des Fokussierglieds ausgelegt ist, dargestellt aus verschiedenen Perspektiven.

In der beispielhaft dargestellten Ausführungsform sind dabei die beiden Haupt-Aspekte vereint.

Die Positioniervorrichtung 30 ist dabei ausgebildet mit einer rotierbar gelagerten Spindel 31 (hier speziell einer Gewindespindel), die über eine Kupplung 42 (hier beispielhaft ausgebildet als Klauenkupplung mit elastischer Zwischenscheibe) mit einer Antriebswelle des Motors 40 verbunden ist.

Das als Kamm ausgebildete Spindel-Gegensegment 43 wirkt so mit der Spindel 31 zusammen, dass - bei Vorliegen einer relativ zwischen dem Spindel-Gegensegment 43 und der Spindel 31 gegeneinander wirkenden Anpresskraft - bei Rotation der Spindel 31 das Spindel-Gegensegment 43 entlang der Spindel 31 (und somit das Schiebeglied 32 entlang der Positionier-Achse) verschoben wird.

Das Spindel-Gegensegment 43 ist gegenüber dem Haupt-Körper des Schiebeglieds 32 flexibel über das Einspannelement 33 (hier ausgebildet als Blattfeder) gelagert, sodass das Spindel-Gegensegment 43 relativ zum Haupt-Körper in mindestens einem Freiheitsgrad beweglich ist. Das Einspannelement ist dabei einenends fix mit dem Haupt-Körper und anderenends fix mit dem Spindel-Gegensegment 43 verbunden.

Als vornehmlich präzise entlang der Positionier-Achse zu verschiebender Hauptpunkt 39 ist ein Mittelpunkt von der durch das Schiebeglied 32 getragenen Linsengruppe 38 definiert.

Ferner ist eine erste, eine sich parallel zur Positionier-Achse erstreckende erste Führungsachse definierende Führung 34 in Form von einer Führungsstange für das Schiebeglied vorhanden. Dabei sind die erste Führung und ein erstes Führungs-Gegensegment 35 des Schiebeglieds (das beispielsweise an zwei Stelen jeweils V- oder U-LagerFlächen für die Führungsstange oder jeweils eine Buchse für die Führungsstange aufweist) derart ausgebildet, gegenseitig angeordnet und zusammenwirkend aufeinander abgestimmt, dass das Schiebeglied 31 entlang der ersten Führungsachse geführt wird und dem Schiebeglied 31 eine lineare Bewegbarkeit entlang der ersten Führungsachse sowie eine Schwenkbarkeit um die erste Führungsachse verbleibt.

Des Weiteren ist eine zweite Führung für das Schiebeglied vorgesehen mit einem sich parallel zur Positionier-Achse erstreckenden zweiten Führungselement 36 (in Form von einer ebenen Gleitfläche). Das zweite Führungselement und ein zweites Führungs-Gegensegment 37 des Schiebeglieds (wie etwa die hier gezeigte Rolle) sind dabei derart ausgebildet, gegenseitig angeordnet und zusammenwirkend aufeinander abgestimmt, dass - bei Vorliegen einer auf das zweite Führungs-Gegensegment 37 wirkenden Anpresskraft gegen das zweite Führungselement 36 - das zweite Führungs-Gegensegment entlang dem zweiten Führungselement geführt wird und die Schwenkbarkeit des Schiebeglieds um die erste Führungsachse beschränkt ist. Das zweite Führungselement dient also als Anschlag für die durch die erste Führung noch gewährte Schwenkbarkeit des Schiebeglieds und als zweite Führung an einer zweiten Stelle (nämlich dem zweiten Führungs-Gegensegment) des Schiebeglieds. Ferner ist hier das zweite Führungselement in Zusammenwirkung mit dem zweiten Führungs-Gegensegment so ausgebildet, dass das zweite Führungs-Gegensegment entlang dem zweiten Führungselement in einer sich parallel zur Positionier-Achse erstreckenden zweiten Längs-Führungsachse und (innerhalb zumindest eines vergleichsweise kleinen Bereichs) in einer sich senkrecht dazu erstreckenden zweiten Quer-Führungsachse geführt wird, sodass also dem Schiebeglied eine geführte Bewegbarkeit entlang der zweiten Längs-Führungsachse über einen gewissen sich in der zweiten Quer-Führungsachse erstreckenden Bereich hinweg gewährleistet ist.

Die erste und zweite Führung, der Motor sowie die Spindel werden dabei durch ein Rahmenwerk getragen, wobei hier durchaus auch Teile eines Gehäuses des optischen Instruments (z.B. das Gehäuse der Anzieleinrichtung des Vermessungsgeräts) als Teil des Rahmenwerks mitwirken können. Im gegebenen Fall können dabei z.B. das zweite Führungselement 36 der zweiten Führung direkt an einem Teil des Gehäuses des Fernrohrs sowie zudem auch der dargestellte Rahmen 41 (der direkt die erste Führung, den Motor sowie die Spindel trägt) ebenso fix an dem Gehäuse des Fernrohrs montiert sein, sodass das Fernrohr-Gehäuse und der dargestellte Rahmen 41 zusammen ein Rahmenwerk für die Komponenten der Positioniervorrichtung bilden.

Gemäss dem ersten erfindungsgemässen Haupt-Aspekt ist nun das Einspannelement 33 derart angeordnet, dass dies bei Einklemmung des Schiebeglieds - hinsichtlich seiner durch die erste Führung gewährten Schwenkbarkeit um die erste Führungsachse - mit seinem Spindel-Gegensegment 43 und seinem zweiten Führungs-Gegensegment 37 zwischen der Spindel 31 bzw. dem zweiten Führungselement 36 in einem vorgespannten Zustand vorliegt und dadurch eine Kraft bewirkt wird, sodass anhand von der durch das im vorgespannten Zustand befindliche Einspannelement bewirkten Kraft zusammen mit einer durch die erste Führung bewirkten Schwenk-Ankerung des Schiebeglieds
- sowohl einerseits das Spindel-Gegensegment 43 und die Spindel 31
- als auch andererseits das zweite Führungs-Gegensegment 37 und das zweite Führungselement 36
jeweils aneinandergedrückt werden.

Gemäss diesem ersten Haupt-Aspekt der Erfindung wird somit dasselbe Einspannelement 33, welches dafür sorgt, dass das Spindel-Gegensegment und die Spindel aneinandergedrückt und somit in einem in Wirkkontakt stehendem Zustand gehalten werden, in einer Dualfunktion (und unter Ausnutzung der ersten Führung als Schwenk-Ankerung) auch gleichzeitig dafür verwendet, dass das zweite Führungs-Gegensegment und das zweite Führungselement aneinandergedrückt und somit in einem in Wirkkontakt stehendem Zustand gehalten werden.

Erfindungsgemäss wird somit eine weniger komplexe und weniger aufwändige Bauweise - insbesondere auch was die benötigte Anzahl an Komponenten der Positionierungsvorrichtung betrifft - ermöglicht.

Gemäss dem zweiten Haupt-Aspekt sind das Schiebeglied 32 mit seinem ersten und zweiten Führungs-Gegensegment 35, 37 und die erste und zweite Führung 34, 36 derart relativ zueinander angeordnet und aufeinander abgestimmt, dass - in einer senkrecht zur Positionier-Achse ausgerichteten Querschnitt-Ebene betrachtet -
- eine x-Richtung, die vom Hauptpunkt des Schiebeglieds zum Durchstosspunkt von der zweiten Längs-Führungsachse der zweiten Führung durch die Querschnitt-Ebene zeigt, und
- eine y-Richtung, die von diesem Hauptpunkt zum Durchstosspunkt von der ersten Führungsachse durch die Querschnitt-Ebene zeigt,
zumindest ungefähr einen rechten Winkel einschliessen, sodass
- für einen in x-Richtung betrachteten x-Verlauf einer bei Verschieben des Schiebeglieds tatsächlich zurückgelegten Spur des Hauptpunkts - im Wesentlichen unbeeinflusst von der ersten Führung - die zweite Führung massgeblich ist und
- für einen in y-Richtung betrachteten y-Verlauf der besagten Spur des Hauptpunkts - im Wesentlichen unbeeinflusst von der zweiten Führung - die erste Führung massgeblich ist.

Dadurch kann eine Separierung bei einer Justage des Schiebeglieds (bzw. der für die Positionierung des Schiebeglieds relevanten Positionierung der ersten und zweiten Führung) bewirkt werden in separierte Justageschritte/-vorgänge für einerseits die Positionierung des Hauptpunkts des Schiebeglieds einmal in x-Richtung und andererseits die Positionierung des Hauptpunkts des Schiebeglieds in y-Richtung.

Somit kann sich vorteilhaft ein Justagevorgang der Positionierungsvorrichtung innerhalb eines optischen Instruments vereinfachen lassen.

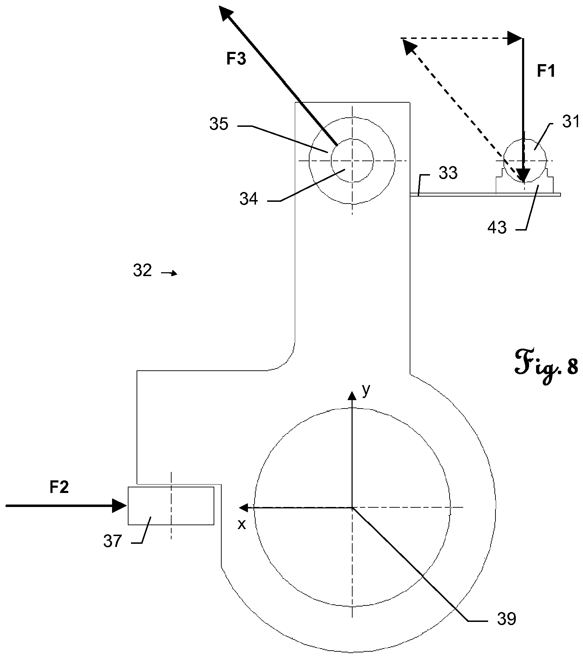

Figur 8 zeigt eine Querschnittsdarstellung durch Schiebeglied, erste und zweite Führung sowie Spindel von der zuvor in Figuren 7a-7e dargestellten Ausführungsform der Erfindung.

Diese Figur illustriert zum einen die - hervorgerufen durch die sich in vorgespanntem Zustand befindliche Blattfeder bewirkte Kraft in Zusammenarbeit mit der Einspannung des Schiebeglieds mit Kamm 43 und Rolle 37 zwischen Spindel 31 bzw. (nicht dargestellter) Gleitfläche sowie der Schwenk-Ankerung in der Führungsstange 34 - wirkenden Kräfte.

So drückt dadurch nun Kamm 43 nach oben auf Spindel 31 und (als Gegenkraft wie hier als F1 dargestellt) natürlich auch Spindel 31 nach unten auf Kamm 43. Ferner drückt die Rolle 37 nach links auf die Gleitfläche und (als Gegenkraft wie hier als F2 dargestellt) natürlich auch die Gleitfläche nach rechts auf die Rolle 37.

Des Weiteren drückt das erste Führungs-Gegensegment 35 dadurch nach schräg rechts unten gegen die Führungsstange 34 und (als Gegenkraft wie hier als F3 dargestellt) natürlich auch die Führungsstange 34 nach schräg rechts oben gegen das erste Führungs-Gegensegment 35.

Dadurch werden also die für das Zusammenwirken von Spindel mit Kamm und Rolle mit Gleitfläche benötigten gegenseitigen Anpresskräfte durch die eine vorgespannte Blattfeder bewirkt.

In einer weiteren Funktion der Blattfeder werden gleichzeitig auch noch das Führungs-Gegensegment 35 und die Führungsstange 34 in einer definierten Richtung gegenseitig aneinandergedrückt, was bei entsprechender Ausbildung des Führungs-Gegensegments 35 zur Vorspannung der Lagerung von Führungs-Gegensegment 35 und Führungsstange 34 relativ zueinander genutzt werden kann.

Sind Führungs-Gegensegment 35 und Führungsstange 34 derart ausgebildet, dass eine V-Lagerung zwischen Führungs-Gegensegment 35 und der Führungsstange ausgebildet ist, kann die gegenseitige Anpresskraft zur Vorspannung der V-Lagerung (also zum Gehaltenwerden im "V") genutzt werden.

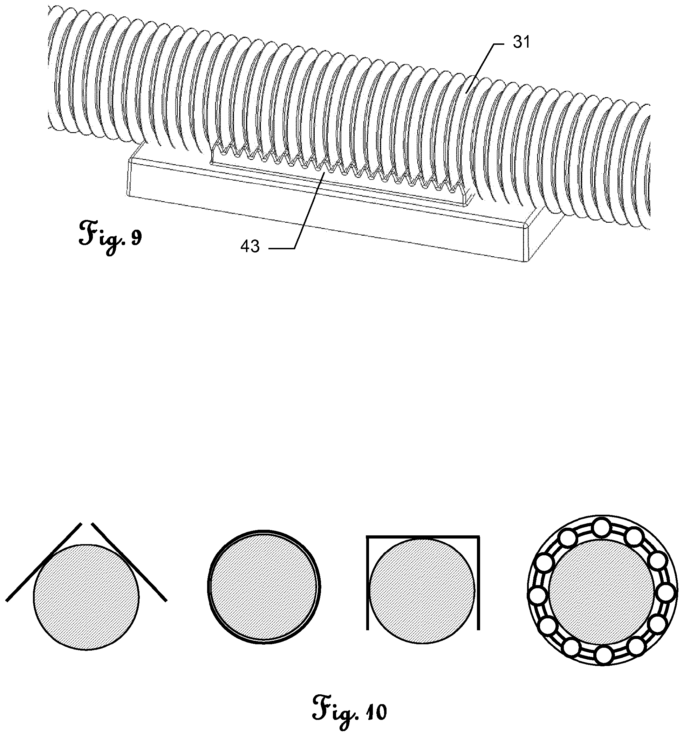

Beispiele für eine Lagerung des Führungs-Gegensegments 35 und der Führungsstange 34 relativ zueinander sind dabei in Figur 10 beispielhaft angegeben und illustriert. So kann ein die Führungsstange und das erste Führungs-Gegensegment relativ zueinander lagerndes erstes Lager ausgebildet sein als (wie in Figur 10 von links nach rechts gezeigt) V-Lager, Buchsenlager, U-Lager oder Kugellager mit Kugelkäfig zwischen Buchse des ersten Führungs-Gegensegments und der Führungsstange.

Figur 9 zeigt einen Ausschnitt der Spindel 31 und des als Kunststoffteil ausgebildeten Rechens (oder Kamms), welcher hier als das Spindel-Gegensegment 43 fungiert, von der Ausführungsform der Erfindung, die auch in den Figuren 7a-7e gezeigt ist.

Der Rechen ist hier mit offenem, einseitigem Spindeleingriff ausgebildet und wirkt derart mit der Spindel und dem Einspannelement zusammen, dass in eingespanntem Zustand des Schiebeglieds (und somit vorgespanntem Zustand der Blattfeder)
- einerseits der Rechen und die Spindel - anpresskraftbedingt - eine im Wesentlichen spielfreie formschlüssige Verbindung eingehen und
- andererseits - durch flexible Lagerung des Rechens relativ zum Schiebeglied-Hauptkörper - anpresskraftentgegengesetzt eine Bewegungsfreiheit für den Rechen zur Lösung der Wirkverbindung gewährt ist (dass der Rechen zumindest minimal abheben kann, um den Formschluss mit der Spindel (zumindest kurzzeitig) zu lösen (und ggf. dann auch wieder neu einzugehen)).

Dadurch kann nun die Positioniervorrichtung besser - z.B. trotz einer auftretenden Fehlfunktion des Motors - gegen interne Selbst-Beschädigung geschützt werden. So kann z.B. im Fall, wenn sich das Schiebeglied bereits an einem zur Begrenzung des Verschiebewegs vorhandenen mechanischen Anschlag befindet und dennoch die Spindel in entsprechend falscher Richtung weiterdreht, sich das Spindel-Gegensegment nun anpresskraftentgegengesetzt aus der formschlüssigen Wirkverbindung mit der Spindel lösen und ein irreversibler mechanischer Defekt an der Spindel, dem Spindel-Gegensegment, am Verstellweg-Anschlag und/oder an den Führungen vermieden werden.

Dadurch, dass die Blattfeder eine längliche Form aufweist und mit ihrer Längsachse senkrecht zur Spindelachse ausgerichtet ist, ist zudem für eine gewisse Flexibilität hinsichtlich einer Kippbarkeit des Spindel-Gegensegments gegenüber Spindel gesorgt.

Dies erlaubt zusammen mit dem durch die Blattfeder ohnehin bewirkten gleichmässigen Anpressdruck selbst bei - in entspanntem Zustand der Blattfeder eigentlich vorhandenen - Ungenauigkeiten in der Positionierung von Rechen gegenüber Spindel (z.B. leichte gegenseitige Kippstellung) dafür, dass in eingespanntem Zustand dann der Rechen dennoch über den gesamten gegenseitigen Kontaktbereich gleichmässig an die Spindel angedrückt wird und durch die Anpresskraft bedingt das Spindel-Gegensegment in eine formschlüssige und im Wesentlichen spielfreie Wirkverbindung mit der Spindel gebracht und so gehalten werden kann.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Geodätisches Vermessungsgerät (1) mit einem Teleskop (2), das eine in dem Teleskop (2) vorgesehene Fokussieroptik mit einer Positionierungsvorrichtung (30) umfasst,
wobei die Positionierungsvorrichtung ausgestattet ist mit
• einer rotierbaren Spindel (31),
• einem entlang einer Positionier-Achse zu positionierenden Schiebeglied (32), wobei ein Spindel-Gegensegment (43) des Schiebeglieds (32) und die Spindel (31) derart ausgebildet, gegenseitig angeordnet und zusammenwirkend aufeinander abgestimmt sind, dass, bei Vorliegen einer relativ zwischen dem Spindel-Gegensegment (43) und der Spindel (31) gegeneinander wirkenden Anpresskraft, bei Rotation der Spindel (31) das Spindel-Gegensegment (43) entlang der Spindel (31) verschoben wird,
• einer ersten, eine sich parallel zur Positionier-Achse erstreckende erste Führungsachse definierenden Führung für das Schiebeglied (32), wobei die erste Führung und ein erstes Führungs-Gegensegment (35) des Schiebeglieds (32) derart ausgebildet, gegenseitig angeordnet und zusammenwirkend aufeinander abgestimmt sind, dass das Schiebeglied (32) entlang der ersten Führungsachse geführt wird und dem Schiebeglied (32) eine lineare Bewegbarkeit entlang der ersten Führungsachse sowie eine Schwenkbarkeit um die erste Führungsachse verbleibt, und
• einer zweiten Führung für das Schiebeglied (32) mit einem sich parallel zur Positionier-Achse erstreckenden zweiten Führungselement (36), wobei das zweite Führungselement (36) und ein zweites Führungs-Gegensegment (37) des Schiebeglieds (32) derart ausgebildet, gegenseitig angeordnet und zusammenwirkend aufeinander abgestimmt sind, dass bei Vorliegen einer auf das zweite Führungs-Gegensegment (37) wirkenden Anpresskraft gegen das zweite Führungselement (36) das zweite Führungs-Gegensegment (37) entlang dem zweiten Führungselement (36) geführt wird und die Schwenkbarkeit des Schiebeglieds um die erste Führungsachse beschränkt ist,
wobei das Schiebeglied (32) eine Fokussieroptik (5), insbesondere ein Fokuslinsensystem oder eine Fokuslinse, trägt, sodass ein Hauptpunkt (39) der Fokussieroptik (5) entlang einer optischen Soll-Achse des Teleskops (2) als Positionier-Achse verschiebbar und dadurch eine Fokuseinstellung vornehmbar ist,
**gekennzeichnet durch**
• ein derart ausgebildetes und angeordnetes sowie eine derartige Kraft bewirkendes Einspannelement (33), dass dadurch das Schiebeglied (32), hinsichtlich seiner durch die erste Führung gewährten Schwenkbarkeit um die erste Führungsachse, mit seinem Spindel-Gegensegment (43) und seinem zweiten Führungs-Gegensegment (37) eingespannt ist zwischen der Spindel (31) bzw. dem zweiten Führungselement (36), sodass anhand von der durch das Einspannelement (33) bewirkten Kraft zusammen mit einer durch die erste Führung bewirkten Ankerung des Schiebeglieds
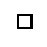 sowohl einerseits das Spindel-Gegensegment (43) und die Spindel (31)
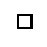 als auch andererseits das zweite Führungs-Gegensegment (37) und das zweite Führungselement (36)
jeweils aneinandergedrückt werden,
wobei
• das Einspannelement (33) als Blattfeder ausgebildet ist, die mit ihren flachen Seiten parallel zur Spindelachse und Positionier-Achse angeordnet ist sowie eine längliche Form aufweist und mit ihrer Längsachse senkrecht zur Spindelachse ausgerichtet ist, und
• das Spindel-Gegensegment (43) über das Einspannelement (33) relativ zu einem Haupt-Körper (16) des Schiebeglieds (32) flexibel gelagert ist und in vorgespanntem Zustand des Einspannelements (33) eine Spreizkraft auf das Spindel-Gegensegment (43) relativ zum Haupt-Körper (16) wirkt, sodass der eingespannte Zustand des Schiebeglieds (32) mit seinem Spindel-Gegensegment (43) und seinem zweiten Führungs-Gegensegment (37) zwischen der Spindel (31) bzw. dem zweiten Führungselement (36) bereitgestellt wird.

2. Geodätisches Vermessungsgerät (1) nach Anspruch 1,
**dadurch gekennzeichnet, dass**
das Einspannelement (33) als Federelement ausgebildet ist.

3. Geodätisches Vermessungsgerät (1) nach Anspruch 1 oder 2,
**dadurch gekennzeichnet, dass**
das Spindel-Gegensegment (43) derart mit offenem, insbesondere einseitigem, Spindeleingriff ausgebildet ist und derart mit der Spindel (31) und dem Einspannelement (33) zusammenwirkt, dass in eingespanntem Zustand des Schiebeglieds (32)
• einerseits das Spindel-Gegensegment (43) und die Spindel (31) anpresskraftbedingt eine spielfreie formschlüssige Verbindung eingehen und
• andererseits durch flexible Lagerung des Spindel-Gegensegments (43) oder der Spindel (31) anpresskraftentgegengesetzt eine Bewegungsfreiheit für das Spindel-Gegensegment (43) bzw. die Spindel (31) zur Lösung der Wirkverbindung gewährt ist.

4. Geodätisches Vermessungsgerät (1) nach einem der vorangehenden Ansprüche, wobei ein die erste und zweite Führung sowie die Spindel tragendes Rahmenwerk (41) vorhanden ist,
**dadurch gekennzeichnet, dass**
die Spindel (31) relativ zu dem Rahmenwerk (41) in einer Quer-Richtung senkrecht zur Spindelachse flexibel gelagert ist und das Einspannelement (33) derart ausgebildet und angeordnet ist, dass in vorgespanntem Zustand des Einspannelements (33) eine translatorische Kraft auf die Spindel (31) in dieser Quer-Richtung wirkt, sodass dadurch der eingespannte Zustand des Schiebeglieds (32) mit seinem Spindel-Gegensegment (43) und seinem zweiten Führungs-Gegensegment (37) zwischen der drückenden Spindel (31) bzw. dem zweiten Führungselement (36) bereitgestellt wird.

5. Geodätisches Vermessungsgerät (1) nach einem der vorangehenden Ansprüche,
**dadurch gekennzeichnet, dass**
durch die durch das Einspannelement (33) bewirkte Kraft das Spindel-Gegensegment (43) und die Spindel (31) gleichmässig über ihre gesamten gegenseitigen Kontaktbereiche verteilt aneinandergedrückt werden.

6. Geodätisches Vermessungsgerät (1) nach einem der vorangehenden Ansprüche,
**dadurch gekennzeichnet, dass**,
dadurch, dass die erste Führung in eingespanntem Zustand des Schiebeglieds (32) als Ankerung für das Schiebeglied (32) dient, ein die erste Führung und das erste Führungs-Gegensegment (35) relativ zueinander lagerndes erstes Lager durch die durch das Einspannelement (33) bewirkte Kraft vorgespannt wird, insbesondere wobei dadurch das erste Führungs-Gegensegment (35) in eine definierte Position relativ zur ersten Führung gedrückt wird.

7. Geodätisches Vermessungsgerät (1) nach einem der vorangehenden Ansprüche,
**dadurch gekennzeichnet, dass**
das Schiebeglied (32) mit seinem ersten (35) und zweiten (37) Führungs-Gegensegment und die erste und zweite Führung derart relativ zueinander angeordnet und aufeinander abgestimmt sind, dass, in einer senkrecht zur Positionier-Achse ausgerichteten Querschnitt-Ebene betrachtet,
• eine x-Richtung, die vom Hauptpunkt (39) zum Durchstosspunkt von der zweiten Längs-Führungsachse durch die Querschnitt-Ebene zeigt, und
• eine y-Richtung, die vom Hauptpunkt zum Durchstosspunkt von der ersten Führungsachse durch die Querschnitt-Ebene zeigt,
einen Winkel von zwischen 60 und 120 Grad, insbesondere zumindest ungefähr einen rechten Winkel, einschliessen, sodass
• für einen in x-Richtung betrachteten x-Verlauf einer bei Verschieben des Schiebeglieds (32) tatsächlich zurückgelegten Spur des Hauptpunkts (39),die zweite Führung massgeblich ist und
• für einen in y-Richtung betrachteten y-Verlauf der Spur des Hauptpunkts (39),die erste Führung massgeblich ist.

8. Geodätisches Vermessungsgerät (1) nach einem der vorangehenden Ansprüche,
**dadurch gekennzeichnet, dass**
die erste Führung ein insbesondere als Führungsstange ausgebildetes erstes Führungselement (34) aufweist und
ein das erste Führungselement (34) und das erste Führungs-Gegensegment (35) relativ zueinander lagerndes erstes Lager ausgebildet ist als
• Gleitlager, speziell
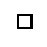 als V- oder U-Lager mit am ersten Führungs-Gegensegment (35) angeordneten Gleitflächen oder Gleitkanten, insbesondere aus Bronze oder gleitoptimiertem Kunststoff, oder
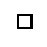 als Buchsenlager mit am ersten Führungs-Gegensegment (35) angeordneter runder Buchse, insbesondere aus Bronze oder gleitoptimiertem Kunststoff,
• Kugellager oder
• Rollenlager, insbesondere zweiachsig.

9. Geodätisches Vermessungsgerät (1) nach einem der vorangehenden Ansprüche, **dadurch gekennzeichnet, dass**
• das zweite Führungselement (36) als ebene Gleitfläche, insbesondere als Keramikplatte, oder als Stange ausgebildet ist, insbesondere wobei eine Längsachse der ebenen Gleitfläche parallel zur Positionier-Achse ausgerichtet ist, sodass dadurch die zweite Längs-Führungsachse definiert ist, und eine Querachse der ebenen Gleitfläche in y-Richtung ausgerichtet ist, sodass dadurch die zweite Quer-Führungsachse definiert ist, und
• das zweite Führungs-Gegensegment (37) aufweist
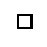 eine Rolle,
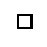 ein Kugellager,
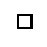 ein oder mehrere Stiftelemente als Gleitelement,
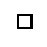 ein oder mehrere Kugelelemente als Gleitelement oder
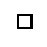 eine Fläche, im Speziellen aus gleitoptimiertem Kunststoff, als Gleitelement.

10. Geodätisches Vermessungsgerät (1) nach einem der vorangehenden Ansprüche,
**dadurch gekennzeichnet, dass**
die Spindel (31) als Gewindespindel und das Spindel-Gegensegment (43) als Rechen ausgebildet sind.

11. Geodätisches Vermessungsgerät (1) nach einem der vorangehenden Ansprüche,
**gekennzeichnet durch**
• einen Motor (40) mit einer Antriebswelle,
• einer Kupplung (42) zur Verbindung der Antriebswelle mit der Spindel (31), insbesondere wobei die Kupplung (42) als Klauenkupplung mit elastischer Zwischenscheibe ausgebildet ist, und/oder
• ein zumindest die erste und zweite Führung, den Motor (40) sowie die Spindel (31) tragendes Rahmenwerk (41).

## Claims

1. Geodetic surveying apparatus (1) having a telescope (2) which comprises a focusing optics provided in the telescope (2) with a positioning device (30),
wherein the positioning device is equipped with
• a rotatable spindle (31),
• a sliding member (32) to be positioned along a positioning axis, wherein a spindle counter-segment (43) of the sliding member (32) and the spindle (31) are designed, mutually arranged and interactingly coordinated with one another in such a way that, in the presence of a contact pressure force acting relative to one another between the spindle counter-segment (43) and the spindle (31), the spindle counter-segment (43) is displaced along the spindle (31) when the spindle (31) rotates,
• a first guide for the sliding member (32) defining a first guide axis extending parallel to the positioning axis, wherein the first guide and a first guide counter-segment (35) of the sliding member (32) are designed, mutually arranged and interactingly coordinated with one another in such a way that the sliding member (32) is guided along the first guide axis and the sliding member (32) retains a linear movability along the first guide axis and a pivotability about the first guide axis, and
• a second guide for the sliding member (32) with a second guide element (36) extending parallel to the positioning axis, wherein the second guide element (36) and a second guide counter-segment (37) of the sliding member (32) are designed, mutually arranged and interactingly coordinated with one another that, when a contact pressure acting on the second guide counter-segment (37) against the second guide element (36) is present, the second guide counter-segment (37) is guided along the second guide element (36) and the pivotability of the sliding member about the first guide axis is limited,
wherein the sliding member (32) carries a focusing optics (5), in particular a focusing lens system or a focusing lens, so that a main point (39) of the focusing optics (5) can be displaced along an optical target axis of the telescope (2) as a positioning axis and a focus adjustment can thereby be made,
**characterized by**
• a clamping element (33) designed and arranged in such a way and exerting such a force that the sliding member (32) is thereby clamped between the spindle (31) and the second guide element (36) with its spindle counter-segment (43) and its second guide counter-segment (37) with respect to its pivotability about the first guide axis provided by the first guide, so that, on the basis of the force exerted by the clamping element (33) together with an anchoring of the sliding member effected by the first guide
∘ both, on the one hand, the spindle counter-segment (43) and the spindle (31)
∘ and, on the other hand, the second guide counter-segment (37) and the second guide element (36)
are pressed in each case against each other,
wherein
• the clamping element (33) is designed as a leaf spring, which is arranged with its flat sides parallel to the spindle axis and positioning axis and has an elongate shape and is aligned with its longitudinal axis perpendicular to the spindle axis, and
• the spindle counter-segment (43) is flexibly mounted relative to a main body (16) of the sliding member (32) via the clamping element (33) and, in the pretensioned state of the clamping element (33), an expanding force acts on the spindle counter-segment (43) relative to the main body (16), so that the clamped state of the sliding member (32) with its spindle counter-segment (43) and its second guide counter-segment (37) is provided between the spindle (31) and the second guide element (36).

2. Geodetic surveying apparatus (1) according to claim 1,
**characterized in that**
the clamping element (33) is designed as a spring element.

3. Geodetic surveying apparatus (1) according to claim 1 or 2,
**characterized in that**
the spindle counter-segment (43) is designed with open, in particular one-sided, spindle engagement and interacts with the spindle (31) and the clamping element (33) in such a way that, in the clamped state of the sliding member (32),
• on the one hand, the spindle counter-segment (43) and the spindle (31) form a play-free positive connection due to the contact pressure and,
• on the other hand, freedom of movement for the spindle counter-segment (43) or the spindle (31) to release the operative connection is ensured by flexible mounting of the spindle counter-segment (43) or the spindle (31) in opposition to the contact pressure.

4. Geodetic surveying apparatus (1) according to one of the preceding claims, wherein a framework (41) carrying the first and second guide and the spindle is present,
**characterized in that**
the spindle (31) is flexibly mounted relative to the framework (41) in a transverse direction perpendicular to the spindle axis and the clamping element (33) is designed and arranged in such a way, that in the pretensioned state of the clamping element (33) a translatory force acts on the spindle (31) in this transverse direction, so that the clamped state of the sliding member (32) with its spindle counter-segment (43) and its second guide counter-segment (37) between the pressing spindle (31) and the second guide element (36) is thereby provided.

5. Geodetic surveying apparatus (1) according to one of the preceding claims, **characterized in that**
the spindle counter-segment (43) and the spindle (31) are pressed against each other evenly distributed over their entire mutual contact areas by the force caused by the clamping element (33).

6. Geodetic surveying apparatus (1) according to one of the preceding claims, **characterized in that,**
because the first guide serves as an anchor for the sliding member (32) in the clamped state of the sliding member (32), a first bearing supporting the first guide and the first guide counter-segment (35) relative to one another is pretensioned by the force caused by the clamping element (33), in particular wherein the first guide counter-segment (35) is thereby pressed into a defined position relative to the first guide.

7. Geodetic surveying apparatus (1) according to one of the preceding claims, **characterized in that**
the sliding member (32) with its first (35) and second (37) guide counter-segment and the first and second guide are arranged relative to one another and matched to one another in such a way that, as viewed in a cross-sectional plane aligned perpendicular to the positioning axis,
• an x-direction facing from the main point (39) to the piercing point of the second longitudinal guide axis through the cross-sectional plane and
• a y-direction facing from the main point to the piercing point of the first guide axis through the cross-sectional plane
include an angle of between 60 and 120 degrees, in particular at least approximately a right angle, so that
• the second guide is decisive for an x-curve, as viewed in the x-direction, of a track of the main point (39) actually covered when the sliding member (32) is displaced, and
• the first guide is decisive for a y-curve, as viewed in the y-direction, of the track of the main point (39).

8. Geodetic surveying apparatus (1) according to one of the preceding claims, **characterized in that**
the first guide has a first guide element (34) designed in particular as a guide rod, and
a first bearing supporting the first guide element (34) and the first guide counter-segment (35) relative to one another is designed as a
• plain bearing, in particular
∘ as a V or U bearing having sliding surfaces or sliding edges arranged on the first guide counter-segment (35), in particular made of bronze or slide-optimized plastic, or
∘ as a bushing bearing having a round bushing arranged on the first guide counter-segment (35), in particular made of bronze or slide-optimized plastic,
• a ball bearing or
• roller bearings, especially biaxial.

9. Geodetic surveying apparatus (1) according to one of the preceding claims, **characterized in that**
• the second guide element (36) is designed as a planar sliding surface, in particular as a ceramic plate, or as a rod, in particular wherein a longitudinal axis of the planar sliding surface is aligned parallel to the positioning axis, so that the second longitudinal guide axis is thereby defined, and a transverse axis of the planar sliding surface is aligned in the y-direction, so that the second transverse guide axis is thereby defined, and
• the second guide counter-segment (37) comprises
∘ a roller,
∘ a ball bearing,
∘ one or more pin elements as sliding elements,
∘ one or more ball elements as sliding elements or
∘ a surface, in particular made of slip-optimized plastic, as a sliding element.

10. Geodetic surveying apparatus (1) according to one of the preceding claims, **characterized in that**
the spindle (31) is designed as a threaded spindle and the spindle counter-segment (43) is designed as a rake.

11. Geodetic surveying apparatus (1) according to one of the preceding claims, **characterized by**
• a motor (40) having a drive shaft,
• a coupling (42) for connecting the drive shaft to the spindle (31), in particular wherein the coupling (42) is designed as a claw coupling with an elastic intermediate disk, and/or
• a framework (41) supporting at least the first and second guide, the motor (40) and the spindle (31).

## Revendications

1. Appareil de mesure géodésique (1) comportant un télescope (2) qui comprend une optique de focalisation prévue dans le télescope (2) et comportant un dispositif de positionnement (30), le dispositif de positionnement étant équipé
• d'une broche rotative (31),
• d'un élément coulissant (32) à positionner le long d'un axe de positionnement, un contre-segment de broche (43) de l'élément coulissant (32) et la broche (31) étant réalisés, disposés mutuellement et adaptés l'un à l'autre de manière à coopérer de telle sorte que, en présence d'une force de pression agissant l'un contre l'autre entre le contre-segment de broche (43) et la broche (31), le contre-segment de broche (43) est déplacé le long de la broche (31) lors de la rotation de la broche (31),
• d'un premier guidage pour l'élément coulissant (32), définissant un premier axe de guidage s'étendant parallèlement à l'axe de positionnement, le premier guidage et un premier contre-segment de guidage (35) de l'élément coulissant (32) étant réalisés, disposés mutuellement et adaptés l'un à l'autre de manière à coopérer de telle sorte que l'élément coulissant (32) est guidé le long du premier axe de guidage et qu'il reste à l'élément coulissant (32) une possibilité de déplacement linéaire le long du premier axe de guidage ainsi qu'une possibilité de pivotement autour du premier axe de guidage, et
• d'un deuxième guidage pour l'élément coulissant (32) avec un deuxième élément de guidage (36) s'étendant parallèlement à l'axe de positionnement, le deuxième élément de guidage (36) et un deuxième contre-segment de guidage (37) de l'élément coulissant (32) étant réalisés, disposés mutuellement et adaptés l'un à l'autre de manière à coopérer de telle sorte que, en présence d'une force de pression agissant sur le deuxième contre-segment de guidage (37) contre le deuxième élément de guidage (36), le deuxième contre-segment de guidage (37) est guidé le long du deuxième élément de guidage (36) et la possibilité de pivotement de l'élément coulissant autour du premier axe de guidage est limitée,
dans lequel l'élément coulissant (32) porte une optique de focalisation (5), en particulier un système de lentilles de focalisation ou une lentille de focalisation, de sorte qu'un point principal (39) de l'optique de focalisation (5) peut être déplacé le long d'un axe optique nominal du télescope (2) servant d'axe de positionnement et qu'un réglage de focalisation peut ainsi être effectué,
**caractérisé par**
• un élément de serrage (33) réalisé et disposé de telle sorte ainsi que produisant une telle force que l'élément coulissant (32), en ce qui concerne sa possibilité de pivotement autour du premier axe de guidage assurée par le premier guidage, est serré avec son contre-segment de broche (43) et son deuxième contre-segment de guidage (37) entre la broche (31) et le deuxième élément de guidage (36), de sorte que, à l'aide de la force produite par l'élément de serrage (33), conjointement avec un ancrage de l'élément coulissant produit par le premier guidage
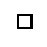 aussi bien, d'une part, le contre-segment de broche (43) et la broche (31)
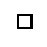 que, d'autre part, le deuxième contre-segment de guidage (37) et le deuxième élément de guidage (36)
sont chaque fois pressés l'un contre l'autre,
dans lequel
• l'élément de serrage (33) est réalisé sous la forme d'un ressort à lame qui est disposé avec ses côtés plats parallèlement à l'axe de broche et à l'axe de positionnement et qui présente une forme allongée et dont l'axe longitudinal est orienté perpendiculairement à l'axe de broche, et
• le contre-segment de broche (43) est monté de manière flexible par l'intermédiaire de l'élément de serrage (33) par rapport à un corps principal (16) de l'élément coulissant (32) et, à l'état précontraint de l'élément de serrage (33), une force d'écartement agit sur le contre-segment de broche (43) par rapport au corps principal (16), de sorte que l'état serré de l'élément coulissant (32) avec son contre-segment de broche (43) et son deuxième contre-segment de guidage (37) est obtenu entre la broche (31) et le deuxième élément de guidage (36).

2. Appareil de mesure géodésique (1) selon la revendication 1,
**caractérisé en ce que**
l'élément de serrage (33) est réalisé sous la forme d'un élément à ressort.

3. Appareil de mesure géodésique (1) selon la revendication 1 ou 2, **caractérisé en ce que**
le contre-segment de broche (43) est réalisé avec une prise de broche ouverte, en particulier unilatérale, et coopère avec la broche (31) et l'élément de serrage (33) de telle sorte qu'à l'état serré de l'élément coulissant (32),
• d'une part, le contre-segment de broche (43) et la broche (31) forment une liaison par complémentarité de forme sans jeu en raison de la force de pression et
• d'autre part, grâce à un montage flexible du contre-segment de broche (43) ou de la broche (31) à l'opposé de la force de pression, une liberté de mouvement est assurée pour le contre-segment de broche (43) ou la broche (31) afin de rompre la liaison active.

4. Appareil de mesure géodésique (1) selon l'une des revendications précédentes, dans lequel il existe un cadre (41) portant le premier et le deuxième guidage ainsi que la broche,
**caractérisé en ce que**
la broche (31) est montée de manière flexible par rapport au cadre (41) dans une direction transversale perpendiculaire à l'axe de broche et l'élément de serrage (33) est réalisé et disposé de telle sorte que, à l'état précontraint de l'élément de serrage (33), une force de translation agit sur la broche (31) dans cette direction transversale, de sorte que l'état serré de l'élément coulissant (32) avec son contre-segment de broche (43) et son deuxième contre-segment de guidage (37) est ainsi obtenu entre la broche (31) exerçant une pression et le deuxième élément de guidage (36).

5. Appareil de mesure géodésique (1) selon l'une des revendications précédentes,
**caractérisé en ce que**
la force produite par l'élément de serrage (33) presse le contre-segment de broche (43) et la broche (31) l'un contre l'autre de manière uniformément répartie sur l'ensemble de leurs zones de contact mutuelles.

6. Appareil de mesure géodésique (1) selon l'une des revendications précédentes,
**caractérisé en ce que**,
du fait que le premier guidage sert d'ancrage pour l'élément coulissant (32) à l'état serré de l'élément coulissant (32), un premier palier supportant le premier guidage et le premier contre-segment de guidage (35) l'un par rapport à l'autre est précontraint par la force produite par l'élément de serrage (33), en particulier le premier contre-segment de guidage (35) étant ainsi pressé dans une position définie par rapport au premier guidage.

7. Appareil de mesure géodésique (1) selon l'une des revendications précédentes,
**caractérisé en ce que**
l'élément coulissant (32) avec son premier (35) et son deuxième (37) contre-segment de guidage et le premier et le deuxième guidage sont disposés les uns par rapport aux l'autre et adaptés les uns aux autres de telle sorte que, vu dans un plan de section transversale orienté perpendiculairement à l'axe de positionnement,
• une direction x, qui va du point principal (39) au point de passage du deuxième axe de guidage longitudinal à travers le plan de section transversale, et
• une direction y, qui va du point principal au point de passage du premier axe de guidage à travers le plan de section transversale,
incluent un angle compris entre 60 et 120 degrés, en particulier au moins approximativement un angle droit, de sorte que
• pour un tracé x, vu dans la direction x, d'une trajectoire effectivement parcourue du point principal (39) lors d'un déplacement de l'élément coulissant (32), le deuxième guidage est déterminant et
• pour un tracé y, vu dans la direction y, de la trajectoire du point principal (39), le premier guidage est déterminant.

8. Appareil de mesure géodésique (1) selon l'une des revendications précédentes,
**caractérisé en ce que**
le premier guidage présente un premier élément de guidage (34) réalisé en particulier sous la forme d'une tige de guidage et
un premier palier supportant le premier élément de guidage (34) et le premier contre-segment de guidage (35) l'un par rapport à l'autre est réalisé sous la forme
• d'un palier lisse, en particulier
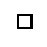 d'un palier en V ou en U avec des surfaces de glissement ou des arêtes de glissement disposées sur le premier contre-segment de guidage (35), en particulier en bronze ou en matière plastique à glissement optimisé, ou
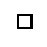 d'un palier à douille avec une douille ronde disposée sur le premier contre-segment de guidage (35), en particulier en bronze ou en matière plastique à glissement optimisé,
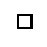 d'un roulement à billes ou
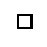 d'un roulement à rouleaux, en particulier à deux axes.

9. Appareil de mesure géodésique (1) selon l'une des revendications précédentes,
**caractérisé en ce que**
• le deuxième élément de guidage (36) est réalisé sous la forme d'une surface de glissement plane, en particulier sous la forme d'une plaque de céramique, ou sous la forme d'une tige, en particulier un axe longitudinal de la surface de glissement plane étant orienté parallèlement à l'axe de positionnement, de sorte que le deuxième axe de guidage longitudinal est ainsi défini, et un axe transversal de la surface de glissement plane étant orienté dans la direction y, de sorte que le deuxième axe de guidage transversal est ainsi défini, et
• le deuxième contre-segment de guidage (37) présente
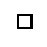 un rouleau,
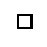 un roulement à billes,
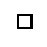 un ou plusieurs éléments en forme de tige comme élément de glissement,
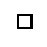 un ou plusieurs éléments sphériques comme élément de glissement ou
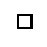 une surface, en particulier en matière plastique à glissement optimisé, comme élément de glissement.

10. Appareil de mesure géodésique (1) selon l'une des revendications précédentes,
**caractérisé en ce que**
la broche (31) est réalisée sous la forme d'une broche filetée et le contre-segment de broche (43) sous la forme d'un râteau.

11. Appareil de mesure géodésique (1) selon l'une des revendications précédentes,
**caractérisé par**
• un moteur (40) avec un arbre d'entraînement,
• un accouplement (42) pour relier l'arbre d'entraînement à la broche (31), en particulier l'accouplement (42) étant réalisé sous la forme d'un accouplement à griffes avec disque intermédiaire élastique, et/ou
• un cadre (41) portant au moins le premier et le deuxième guidage, le moteur (40) ainsi que la broche (31).
